(19) Europäisches Patentamt

European Patent Office

Office européen des brevets

(11) Veröffentlichungsnummer : **0 127 158**
**B1**

(12) **EUROPÄISCHE PATENTSCHRIFT**

(45) Veröffentlichungstag der Patentschrift :
20.08.86

(21) Anmeldenummer : 84105988.4

(22) Anmeldetag : 25.05.84

(51) Int. Cl.⁴ : **H 02 P 5/40, H 02 P 7/62**

(54) Verfahren und Vorrichtung zur Bestimmung des Flussvektors einer Drehfeldmaschine aus Ständerstrom und Ständerspannung und deren Anwendung.

(30) Priorität : 18.05.84 DE 3418641
27.05.83 DE 3319350

(43) Veröffentlichungstag der Anmeldung :
05.12.84 Patentblatt 84/49

(45) Bekanntmachung des Hinweises auf die Patenterteilung : 20.08.86 Patentblatt 86/34

(84) Benannte Vertragsstaaten :
AT BE CH DE FR GB IT LI NL SE

(56) Entgegenhaltungen :
EP-A- 0 019 138
EP-A- 0 043 973
DE-A- 3 034 275
DE-A- 3 139 136
FR-A- 2 361 665
PATENTS ABSTRACTS OF JAPAN, Band 5, Nr. 7 (E-41)(679), 17. Januar 1981
SIEMENS FORSCHUNGS- UND ENTWICKLUNGSBE-RICHTE, Band 1, Nr. 1/72, 1972, Seiten 184-193, Springer-Verlag, Berlin, DE; F.BLASCHKE:"Das Verfahren der Feldorientierung zur Regelung der Asynchronmaschine"

(73) Patentinhaber : **Siemens Aktiengesellschaft Berlin und München**
**Wittelsbacherplatz 2**
**D-8000 München 2 (DE)**

(72) Erfinder : **Blaschke, Felix, Dr.**
**Steinfortstrasse 19**
**D-8520 Erlangen (DE)**

## Beschreibung

Die Erfindung betrifft ein Verfahren zur Bestimmung des Flußvektors einer Drehfeldmaschine aus Ständerstrom und Ständerspannung mit den Merkmalen des Oberbegriffs des Anspruches 1. Die Erfindung betrifft ferner eine Vorrichtung zur Durchführung des Verfahrens sowie eine Anwendung.

Ein derartiges Verfahren ist bei der Vorrichtung nach der deutschen Offenlegungsschrift 3 026 202 für den feldorientierten Betrieb einer umrichtergespeisten Drehfeldmaschine verwendet. Bei der Feldorientierung wird die Lage des Flußvektors erfaßt und der die Maschine speisende Umrichter in Abhängigkeit von der Lage des Flußvektors so gesteuert, daß die zum Fluß parallele Komponente des Ständerstromes und die dazu senkrechte Ständerstromkomponente unabhängig beeinflußbar sind. Über die Steuerung der flußparallelen Ständerstromkomponente (Magnetisierungsstrom) kann ein vorgegebener Wert für den Betrag des Flusses eingestellt werden, während die zum Fluß senkrechte Stromkomponente (Wirkstrom) dann linear in das Drehmoment eingeht und unmittelbar zur entkoppelten Steuerung von Drehzahl oder Drehmoment verwendet werden kann.

Für diese Feldorientierung ist aber die Kenntnis der Flußlage erforderlich. Dabei ist es vorteilhaft, den Fluß nicht über Hallsonden direkt zu messen, sondern mittels einer Rechenmodellschaltung aus elektrischen Größen zu berechnen. Die einfachste Möglichkeit hierzu ist ein sogenanntes « Spannungsmodell », das aus den Eingangsspannungen des Motors durch Abzug des ohmschen Ständerspannungsabfalls und der induktiven Streuspannungen die induzierte EMK bestimmt. Der Fluß ergibt sich dann als Integral der EMK.

Zur Beschreibung der Maschinenströme, Maschinenspannungen, der EMK und des Flusses können ebene Vektoren verwendet werden, mit jeweils zwei Bestimmungsgrößen, z. B. ihre kartesischen oder polaren Komponenten bezüglich eines ruhenden (d. h. ständerorientierten oder « raumfesten ») oder mit der Läuferachse rotierenden (« läuferorientierten ») oder der Feldachse rotierenden (« feldorientierten ») Koordinatensystems. Für das erwähnte « Spannungsmodell » ist die Betrachtung im ständerorientierten kartesischen Koordinatensystem am einfachsten, da es hierzu lediglich erforderlich ist, z. B. bei einer dreiphasigen Maschine aus den Spannungen und Strömen der drei um 120° gegeneinander versetzten Phase mittels eines « 3/2 »-Koordinatenwandlers die entsprechenden kartesischen, raumfesten Komponenten (derartige « ständerorientierte » Vektorkomponenten sind hier mit den Indizes S1 und S2 gekennzeichnet) des entsprechenden Ständerstromvektors $\underline{i}_s$ und des Ständerspannungsvektors $\underline{u}_s$ zu bilden, wobei sich der Vektor $\underline{e}_s$ der EMK dann unter Berücksichtigung des Ständerwiderstandes $r^s$ und der Streuinduktivität $l^\sigma$ durch komponentenweise Addition gemäß

$$\underline{e}_s = \underline{u}_s - r^s \cdot \underline{i}_s - l^\sigma \cdot d\underline{i}_s/dt$$

errechnet.

Die kartesischen ständerorientierten Komponenten des Flußvektors $\underline{\psi}_s$ ergeben sich dann jeweils als Integral der entsprechenden Komponente des EMK-Vektors. In einem mit dem Flußvektor rotierenden Koordinatensystem mit der feldparallelen Koordinatenachse $\varphi_1$ und der feldsenkrechten Koordinatenachse $\varphi_2$ besitzt der EMK-Vektor die « feldorientierten » Komponenten $e_{\varphi1}$ und $e_{\varphi2}$ und in der physikalischen Vektorbeziehung $\underline{\psi} = \int \underline{e} \cdot dt$ tritt dann gemäß

$$\psi_{\varphi1} = \int (e_{\varphi1} + \dot{\varphi}_s \, \psi_{\varphi2}) \, dt \, ,$$

$$\psi_{\varphi2} = \int (e_{\varphi2} - \dot{\varphi}_s \, \psi_{\varphi1}) \, dt$$

eine der Flußfrequenz $\dot{\varphi}_s$ (d. h. der Ableitung des Winkels $\varphi_s$ zwischen den Achsen $\varphi_1$ und $s_1$) zugeordnete rotatorische Komponente auf. Das Spannungsmodell ist daher stets ständerorientiert betrieben.

Die für die EMK-Integration erforderlichen offenen Integratoren neigen zum Wegdriften und müssen stabilisiert werden, z. B. über einen in einer Rückführungsleitung des Integrators liegenden Nullpunktregler. Mit der Nullpunktdrift der Integratoren werden jedoch bei niedrigen Betriebsfrequenzen auch die entsprechend langsamen Änderungen der Flußkomponenten unterdrückt. Außerdem entsteht im stationären Betrieb ein Winkelfehler, der sich ebenfalls vor allem bei niedrigen Frequenzen auswirkt und zu einer störenden Fehlorientierung führt, wenn die Sollwerte für den Ständerstrom feldorientiert vorgegeben werden. Diesen Nachteilen steht jedoch die gute Dynamik dieses Spannungsmodells gegenüber.

Es ist aber auch möglich, einen Modellwert für den Maschinenfluß aus den Maschinenströmen (d. h. dem Ständerstromvektor $\underline{i}_s$ und im Fall einer Synchronmaschine auch dem Erregerstrom $i^e$) und der gemessenen Läuferstellung $\lambda$ oder, was meßtechnisch häufig vorteilhaft ist, aus der Läuferdrehzahl $\dot{\lambda}$, zu ermitteln. Dieses « Strommodell » bildet die in der Maschine auftretenden Vorgänge, soweit sie zur Ausbildung des Flusses führen, elektronisch nach. Für dieses Strommodell ist die Verwendung eines feldorientierten Koordinatensystems vorteilhaft, wobei die Läuferzeitkonstante als Zeitkonstante eines Glättungsgliedes berücksichtigt wird und das Strommodell eine Modell-Flußfrequenz bildet, aus der durch Integration der Flußwinkel gebildet werden kann.

Die Umrechnung von einem Koordinatensystem in ein anderes, um einen vorgegebenen Winkel gedrehtes Koordinatensystem geschieht dadurch, daß die entsprechenden Komponenten des zu transformierenden Vektors einem sogenannten « Vektordreher » zugeführt werden, an dessen Winkeleingang ein entsprechendes Winkelsignal, z. B. Sinus und Cosinus des Drehwinkels, angelegt werden.

Beim Strommodell müssen möglichst genaue Modellparameter für die Maschinenparameter eingestellt werden, so daß z. B. temperaturbedingte Änderungen des Läuferwiderstandes sowohl bei stationären wie bei dynamischen Vorgängen zu Verfälschungen des Modellflusses führen. Für höhere Betriebsfrequenzen ist daher das Spannungsmodell vorzuziehen, bei niedrigen Betriebsfrequenzen führt jedoch das Strommodell trotz möglicher stationärer Ungenauigkeiten zu einem besserenen Modellwert für den Fluß.

In der erwähnten deutschen Offenlegungsschrift 3 026 202.3 ist daher eine Kombination beider Modelle vorgesehen. Entsprechend dem Spannungsmodell werden aus den Maschinenströmen und Maschinenspannungen zwei Komponenten eines dem Spannungsmodell zugeordneten Modell-EMK-Vektors $\underline{e}_s(u)$ gebildet, aus denen dann die entsprechenden Komponenten des diesem Spannungsmodell zugeordneten Flußvektors $\underline{\psi}_s(u)$ gebildet werden. Die Schaltung arbeitet hierbei ständerorientiert und enthält für die Bildung des Flusses je einen Integrator für jede kartesische EMK-Komponente. Zur Stabilisierung dieser Integratoren wird jeweils eine Komponente dieses Flußvektors in einer Rückführungsleitung einem Regler aufgeschaltet, dessen Ausgangssignal als Korrekturgröße zur Korrektur der entsprechenden Komponente des Modell-EMK-Vektors dem Integratoreingang aufgeschaltet ist. Dem Sollwerteingang dieser Regler wird dabei die entsprechende Komponente eines im Strommodell aus den Ständerströmen und der Läuferstellung $\lambda$ gebildeten Modellflußvektors als Führungsgröße $\psi^*$ zugeführt.

Die Regler erhalten an ihren Eingängen also die kartesischen raumfesten Komponenten des Differenzvektors $\psi_s(u) - \psi_s^*$ und liefern die kartesischen raumfesten Komponenten eines Korrekturvektors, durch dessen Aufschaltung auf das Spannungsmodell der Differenzvektor im Mittel ausgeregelt wird. Dadurch wird erreicht, daß das Spannungsmodell zumindest hinsichtlich seines stationären Verhaltens dem Strommodell nachgeführt wird, so daß die gute Dynamik des Spannungsmodells beibehalten, jedoch die bei niedrigen Frequenzen bessere stationäre Flußbestimmung des Strommodells ausgenutzt wird.

Die Ausgänge der beiden bekannten Korrekturregler stellen die kartesischen ständerorientierten Komponenten eines Korrekturvektors dar, der im wesentlichen mit der Frequenz des Vektors $\psi_s$ umläuft. Die Regler müssen also ständig Wechselgrößen verarbeiten, was nicht nur bei hohen Betriebsfrequenzen nachteilig sein kann und insbesondere Schwierigkeiten bereitet, wenn das Verfahren mit einem Mikroprozessor durchgeführt werden soll.

Aufgabe der Erfindung ist es daher, eine andere Möglichkeit zum Ermitteln des Flußvektors einer Drehfeldmaschine zu schaffen.

Diese Aufgabe wird gelöst durch ein Verfahrem mit den Merkmalen des Anspruchs 1 und/oder 2. Eine vorteilhafte Vorrichtung zur Durchführung des Verfahrens ist im Anspruch 12 angegeben. Die Unteransprüche betreffen weitere vorteilhafte Ausgestaltungen der Erfindung.

Die Erfindung geht ebenfalls davon aus, daß zunächst mittels eines EMK-Detektors aus Spannung und Strom der EMK-Vektor der Drehfeldmaschine gebildet wird, der dann mittels eines aus dem ermittelten Flußvektor abgeleiteten Rückführungssignals modifiziert wird, um durch Integration des modifizierten EMK-Vektors den Flußvektor zu bilden.

Gemäß zweier grundlegender Ausführungsformen wird zum Modifizieren des EMK-Vektors von einem rotierenden orthogonalen Koordinatensystem ausgegangen, in dem die EMK-Komponenten weiterverarbeitet werden. Da die eine Koordinatenachse dabei letztlich, wie noch dargelegt wird, in Richtung des Flußvektors zeigt, weist der transformierte EMK-Vektor somit die orthogonalen Komponenten $e_{\varphi 1}$ und $e_{\varphi 2}$ auf. Der Flußvektor wird nunmehr aus dieser modifizierten EMK durch ein spezielles Integrationsverfahren gebildet.

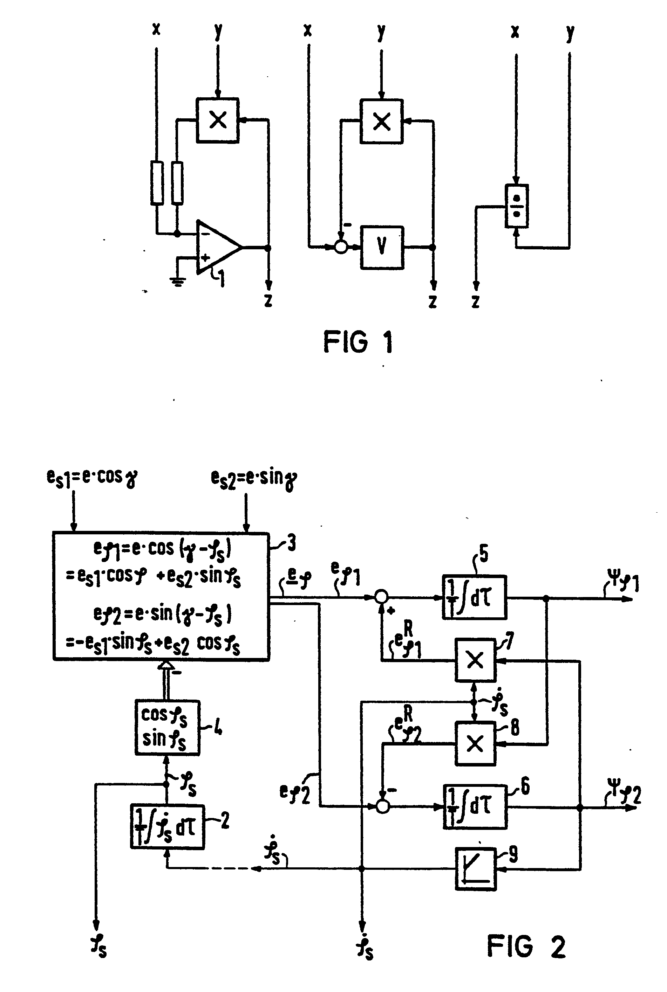

Zur Erläuterung dieses Verfahrens ist in Figur 1 eine Regelschleife mit einem als sehr schnell wirkender Regler aufgefaßten Operationsverstärker 1 dargestellt, dessen Ausgangsgröße Z über eine Gegenkopplungsschleife mit dem Verstärkungsfaktor Y der Regler-Eingangsgröße X aufgeschaltet ist. Wird mit V die Verstärkung des offenen Operationsverstärkers 1 bezeichnet, so ergibt sich für diese Schaltung die daneben angegebene mathematische Struktur, für die gilt

$$(X - Y \cdot Z) \cdot V = Z \quad \text{oder} \quad Z = \frac{X}{Y + 1/V}.$$

Bei genügend großer Verstärkung ergibt sich dabei

$$\lim_{V \to \infty} Z = \frac{X}{Y},$$

also letztlich eine Division, wie in Figur 1 ebenfalls dargestellt ist.

Figur 2 zeigt eine Schaltung zur Bildung der Flußkomponenten $\psi_{\varphi 1}$, $\psi_{\varphi 2}$ in einem mit der (zunächst

beliebigen) Frequenz $\dot{\varphi}_s$ rotierenden Bezugssystem, wobei das den jeweiligen momentanen Drehwinkel zwischen dem raumfesten Koordinatensystem (Achsen $\underline{s}1$, $\underline{s}2$) und dem rotierenden Koordinatensystem ($\varphi1$, $\varphi2$) festlegende Winkelsignal $\varphi_s$ aus einem entsprechenden Frequenzsignal $\dot{\varphi}_s$ durch einen Integrator 2 gebildet wird. Mittels dieses Winkels $\varphi_s$ bildet ein Vektordreher 3 aus den ständerorientierten EMK-Komponenten $e_{s1}$, $e_{s2}$ die transformierten Komponenten $e_{\varphi1}$, $e_{\varphi2}$, wobei es insbesondere vorteilhaft ist, aus dem Winkel $\varphi_s$ mittels eines Winkelfunktionsgebers 4 die Winkelfunktionen cos $\varphi_s$, sin $\varphi_s$, also die ständerorientierten kartesischen Komponenten eines entsprechenden Einheitsvektors $\varphi_s$ zu bilden und dem Vektordreher 3 als entsprechendes Drehwinkel-Signalpaar zuzuführen, so daß der Vektordreher 3 nur noch wenige einfache algebraische Operationen auszuführen hat.

Um aus der EMK zum Fluß zu kommen, genügt es nun an sich nicht, lediglich die transformierten Komponenten $e_{\varphi1}$, $e_{\varphi2}$ zu integrieren (Integratoren 5, 6) vielmehr müssen diesen Integratoren entsprechend der bereits erwähnten Vektorbeziehung die rotatorischen Komponenten $e_{\varphi1}^{\wedge} = \dot{\varphi}_s \cdot \psi_{\varphi2}$ und $e_{\varphi2}^{\wedge} = - \dot{\varphi}_s \cdot \psi_{\varphi1}$ zugeführt werden. Figur 2 zeigt die entsprechenden Rückführungsschleifen mit Multiplizierern 7 und 8.

Das rotierende Koordinatensystem wird nun feldorientiert, wenn die Koordinatenachse $\varphi1$ tatsächlich in Richtung des Flußvektors zeigt. Dann geben $e_{\varphi1}$ und $e_{\varphi2}$ die feldorientierten EMK-Komponenten an, und es gilt $\psi_{\varphi1} = |\psi_\varphi|$, $\psi_{\varphi2} = 0$. Dies wird erreicht, in dem ein Nullpunktregler 9, der sehr schnell arbeiten muß, die Frequenz $\dot{\varphi}_s$ durch Ausregeln der Komponente $\psi_{\varphi2}$ vorgibt. Figur 2 gibt somit an, wie der EMK-Vektor im feldorientierten Koordinatensystem unter Berücksichtigung der rotatorischen Komponenten zu integrieren ist.

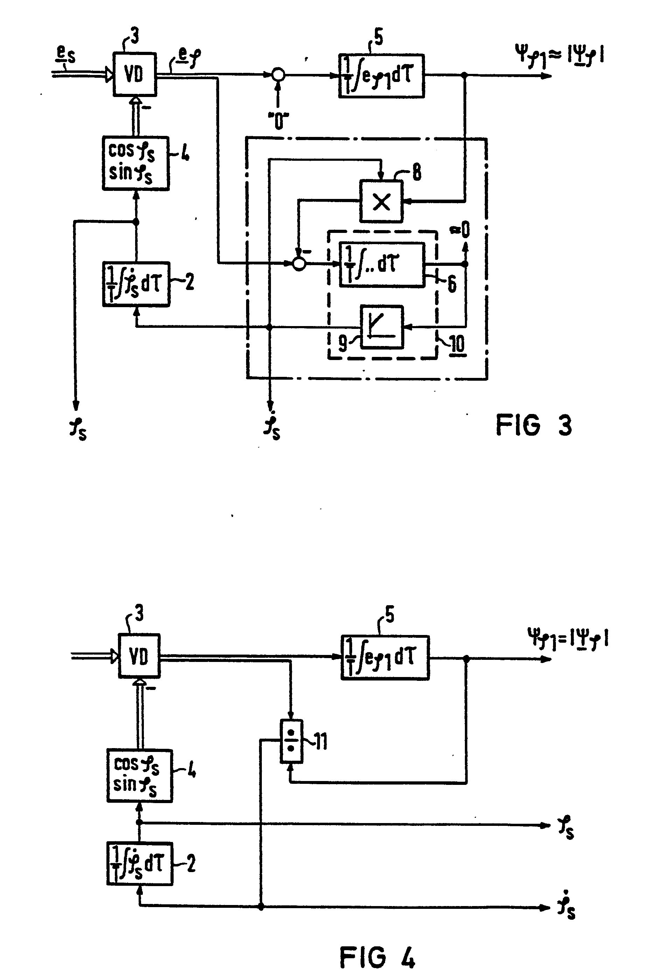

Da jedoch der schnelle Regler 9 stets möglichst exakt $\psi_{\varphi2} = 0$ erzwingen soll, kann der Multiplizierer 7 in Figur 2 entfallen. Dies führt zu der in Figur 3 dargestellten Schaltung, bei der jeweils ein durch seine kartesischen Komponenten gegebener Vektor durch einen Doppelpfeil, entsprechend den beiden Signalleitungen für seine kartesischen Komponenten, dargestellt ist.

Für die aus Figur 2 übernommenen Bauteile sind die gleichen Bezugszeichen beibehalten. Man entnimmt nun dieser Figur, daß bei hinreichend hoher Verstärkung der aus dem Integrator 6 und dem sehr schnellen Regler 9 bestehenden Baugruppe 10 die in Figur 1 bereits abgehandelte Struktur entsteht, bei der die Elemente 6, 8 und 9 der Figur 3 bzw. die Elemente 6 bis 9 der Figur 2 durch einen einzigen Dividierer 11 ersetzbar sind (Figur 4).

Man kommt so zu einem Verfahren, bei dem ein ein rotierendes orthogonales Koordinatensystem ($\varphi_1$, $\varphi_2$) festlegendes Signal ($\varphi_s$) gebildet wird, mit dem der von einem EMK-Detektor in einem ständerorientierten Koordinatensystem festgelegte EMK-Vektor $\underline{e}_s$ in ein rotierendes Koordinatensystem transformiert wird (Vektordreher 3). Die feldorientierten Komponenten $e_{\varphi1}$ und $e_{\varphi2}$ des EMK-Vektors stellen somit den modifizierten EMK-Vektor dar.

Der Betrag $|\psi_\varphi|$ des Flußvektors wird nun durch Integration der ersten modifizierten EMK-Komponente $e_{\varphi1}$ gebildet (Integrator 5). Aus dem Quotienten $e_{\varphi2}/\psi$ wird die Frequenz $\dot{\varphi}_s$ des Flußvektors gebildet (Dividierer 11). Durch Integration dieser Frequenz (Integrator 2) ergibt sich das Rückführungssignal $\varphi_s$, das gleichzeitig den Drehwinkel des rotierenden Koordinatensystems und die Richtung des Flußvektors festlegt. Damit sind bereits die ständerorientierten polaren Komponenten des Flußvektors ermittelt.

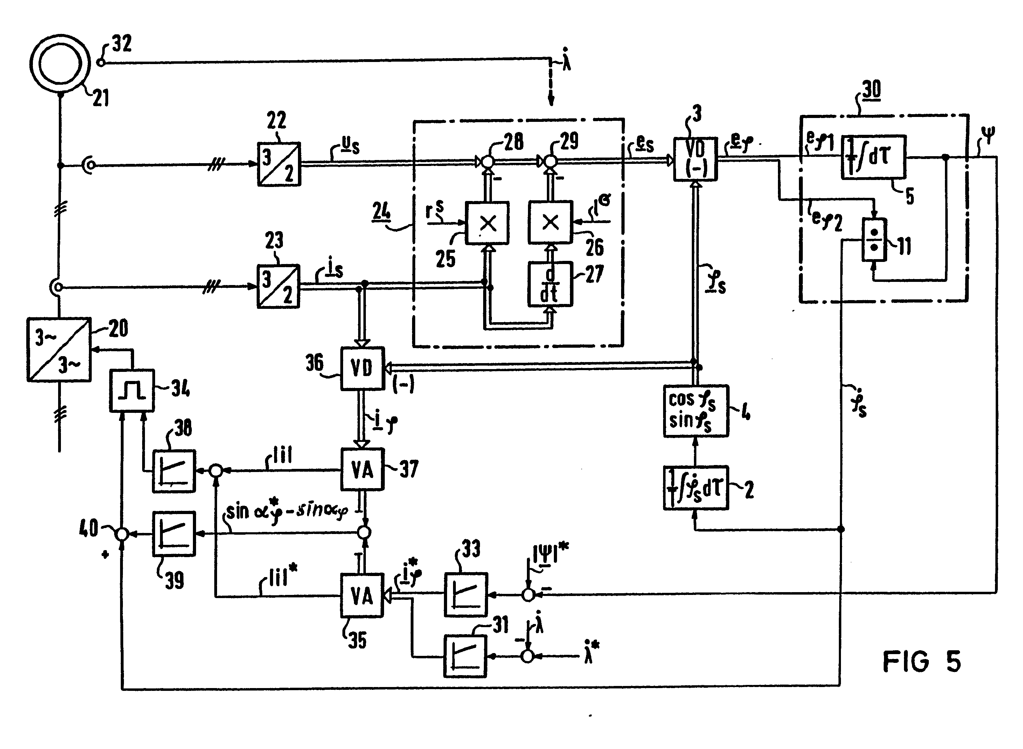

Figur 5 zeigt nun, wie dieses Verfahren in die feldorientierte Steuerung einer von einem Umrichter 20 gespeisten Drehfeldmaschine 21, in diesem Fall einer Asynchronmaschine, eingebaut werden kann. Mittels 3/2-Koordinatenwandlern 22, 23 werden aus Meßwerten für Strom und Spannung die entsprechenden ständerorientierten Vektoren $\underline{i}_s$ und $\underline{u}_s$ gebildet, aus denen der EMK-Detektor 24 den ständerorientierten EMK-Vektor $\underline{e}_s$ bildet. Dies wird in Figur 5 dadurch erreicht, daß mittels Multiplizierern 25, 26 und einem Differenzierer 27 der Vektor $r^s \cdot \underline{i}_s$ des ohmschen Spannungsabfalls und der Vektor $l^\sigma \cdot d\underline{i}_s/dt$ des Streuspannungsabfalls gebildet und an Additionsstellen 28 und 29 vom Spannungsvektor subtrahiert werden.

Der Vektordreher 3, die aus den Elementen 2, 5 und 11 bestehende Schaltgruppe 30 und der Winkelfunktionsgenerator 4 bilden daraus den Flußbetrag $|\psi_\varphi|$ und die kartesischen ständerorientierten Komponenten des in Richtung des Flußvektors zeigenden Einheitsvektors $\varphi_s$. Im feldorientierten Koordinatensystem ist $|\psi_\varphi| = \psi_{\varphi1}$ und $\psi_{\varphi2} = 0$ zu setzen, im ständerorientierten Koordinatensystem ergeben sich die polaren Flußkomponenten $|\psi_\varphi| = \psi$ und $\varphi_s$ bzw. durch Multiplikation der Einheitsvektor-Komponenten mit dem Flußbetrag $\psi$ die ständerorientierten kartesischen Komponenten $\psi_{s1} = \psi \cdot \cos \varphi_s$ und $\psi_{s2} = \psi \cdot \sin \varphi_s$ des Vektors $\underline{\psi}_s = \psi \cdot \varphi_s$.

Damit steht die für den feldorientierten Betrieb der Drehfeldmaschine nötige Information über den Fluß der Drehfeldmaschine zur Verfügung. Bei einem derartigen feldorientierten Betrieb kann z. B. eine Drehzahlregelung (Drehzahlregler 31) vorgesehen sein, der die Drehzahl $\lambda$, d. h. die Ableitung des von einem Drehwinkelgeber gelieferten Drehwinkels auf einen entsprechenden Sollwert $\lambda^*$ einregelt. Das Ausgangssignal des Drehzahlreglers 31 liefert dann den Sollwert für das von der Maschine zur Aufrechterhaltung der Drehzahl aufzubringende Moment bzw. den dazu proportionalen Soll-Wirkstrom $i_{\varphi2}$. Unter « Wirkstrom » wird dabei die drehmomentenbildende, zum Fluß senkrechte Komponente des Ständerstroms bezeichnet. Die Führungsgröße für diesen Wirkstrom kann natürlich auch durch eine Drehmomentensteuerung oder -regelung oder auf andere Weise vorgegeben werden.

In Figur 5 ist ferner durch einen Flußregler 33 angedeutet, daß der Fluß der Drehfeldmaschine auf

4

einen vorgegebenen Sollwert $|\psi|^*$ regelbar ist. Das Ausgangssignal dieses Flußreglers 33 stellt dann die Führungsgröße $i^*_{\varphi 1}$ für den « Magnetisierungsstrom », d. h. die flußparallele Komponente des Ständerstroms bereit. Häufig wird allerdings auf eine Flußregelung verzichtet und der Magnetisierungsstrom entsprechend einem konstanten Fluß bei Normalbetrieb und einem abnehmendem Fluß im Feldschwächbereich vorgegeben. Die Führungsgrößen für Wirkstrom und Magnetisierungsstrom stellen somit die kartesischen Komponenten des Soll-Ständerstromes im feldorientierten Koordinatensystem dar (Vektor $i^*_c$) und es ist lediglich erforderlich, aus diesen feldorientierten Führungsgrößen unter Verwendung der Information über den Flußwinkel geeignete ständerorientierte Führungsgrößen für den Ständerstrom zu bilden, der der Maschine über den Umrichter 20 und dessen Steuersatz 34 eingeprägt wird.

Der Steuersatz 34 besitzt beim Ausführungsbeispiel nach Figur 5 zwei getrennte Eingänge für den Betrag und die Richtung (Phase) des Ständerstromvektors. Die Stellgröße für den Strombetrag kann aus dem feldorientierten Sollvektor $i^*_c$ mittels eines Vektoranalysators 35 gebildet werden, der an seinem Betragsausgang den Sollbetrag $|i|^*$ bereitstellt und an seinem Winkelsignalausgang das Winkelfunktionspaar $\cos \alpha^*_\varphi$, $\sin \alpha^*_\varphi$ für den Soll-Winkel $\alpha^*_\varphi$ zwischen Ständerstrom-Vektor und der Achse $\varphi_1 = \varphi_s$ (Flußachse).

Dieser im « feldorientierten » Koordinatensystem vorgegebene Sollstromvektor kann als Sollwert für eine Stromregelung verwendet werden, der dann die entsprechenden feldorientierten Komponenten des Iststromvektors zuzuführen sind. Hierzu transformiert ein Vektordreher 36 den Iststromvektor $i_s$ mittels des Flußwinkels $\varphi_s$ in das feldorientierte Koordinatensystem (Iststromvektor $i_c$), wobei ein anschließender Vektoranalysator 37 den Ist-Betrag $|i|$ und den feldorientierten Stromwinkel $\alpha_\varphi$ (Winkel zwischen Fluß und Strom) liefert. Durch Regelung des derart ermittelten Strombetrages (Betragsregler 38) wird somit die Betragsstellgröße für den Steuersatz 34 gebildet, während der entsprechende Winkelregler 39 die Frequenzstellgröße so vorgibt, daß der feldorientierte Stromwinkel $\alpha_\varphi$ gleich dem entsprechenden Sollwert $\alpha^*_\varphi$ wird. Für diese feldorientierte Winkelregelung kann an sich der Winkel $\alpha_\varphi$, der Tangens des Winkels oder eine andere Funktion dieses Winkels verwendet werden ; in Figur 5 ist die feldorientierte kartesische Koordinate $\sin \alpha_\varphi$ verwendet, die an den Vektorausgängen der Vektoranalysatoren 35 und 37 als Ist- und Sollwert ansteht.

Figur 5 ist nur ein Beispiel einer feldorientierten Regelung, wobei die Regelung des Stromes auf die feldorientiert vorgegebenen Sollwerte im feldorientierten Koordinatensystem vorgenommen wird, d. h. die Stromistwerte werden mittels des Vektordrehers 36 in das feldorientierte Koordinatensystem transformiert, um den Reglern 38 und 39 Gleichgrößen vorgebenzu können. Der Regler 39 kann dabei weitgehend entlastet werden, indem einer nachgeschalteten Additionsstelle 40 die Feldfrequenz im Sinne einer Vorsteuerung aufgeschaltet wird.

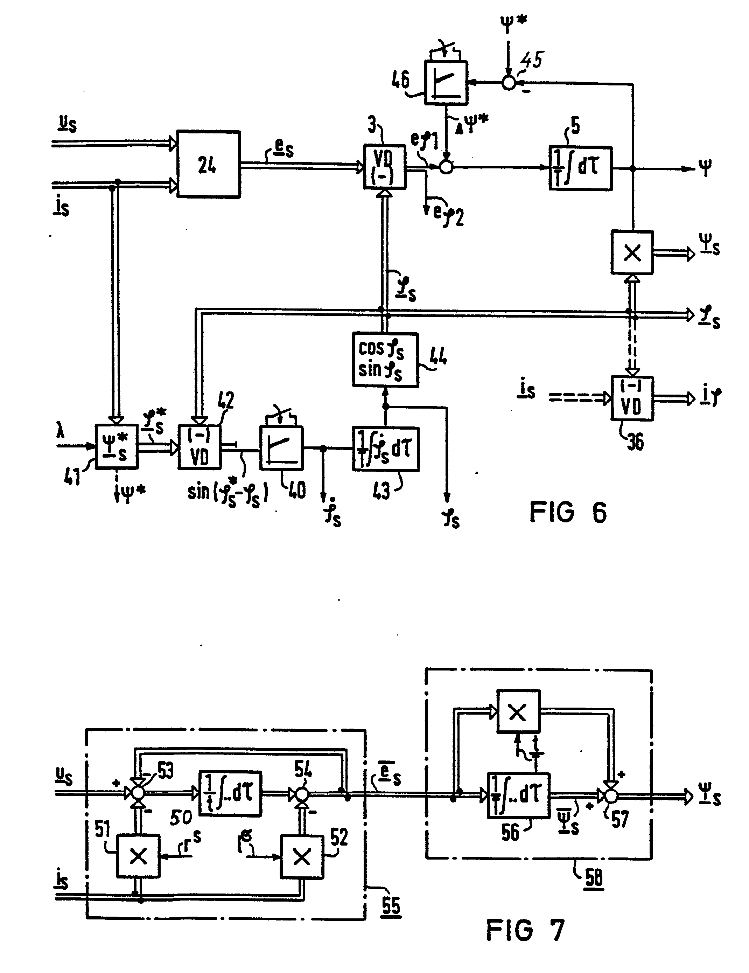

Durch die feldorientierte Regelung der Maschine bestimmen letztlich die gemäß der Erfindung bestimmten Werte für den Flußbetrag $\psi$ und den Flußwinkel $\varphi_s$ die Steuerung der Maschine. Beiniedrigen Frequenzen liegt allerdings der Pegel der zur Flußbestimmung benötigten Spannungsmeßwerte so niedrig, daß Ungenauigkeiten bei der Flußbestimmung auftreten können. Diese Ungenauigkeiten machen sich vor allem bei stationärem Betrieb mit niedrigen Frequenzen bemerkbar, während dynamische Vorgänge durch die Vorrichtung noch verhältnismäßig genau erfaßbar sind. Deshalb ist in Figur 6 eine Anordnung gezeigt, bei der die Schaltung von Führungsgrößen für Betrag und Winkel des Flusses so geführt wird, daß stationäre Fehler weitgehend ausgeregelt werden, jedoch die Erfassung dynamischer Vorgänge erhalten bleibt.

Da also stationär bei niedrigen Frequenzen der Flußwinkel von einer Führungsgröße, in diesem Fall dem Einheitsvektor $\varphi^*_s$ eines Fluß-Führungsvektors $\psi^*_s$ bestimmt wird, genügt es, durch einen Nachführregler 40 den Winkel $\varphi_s$ bzw. dessen Einheitsvektor $\varphi_s$ entsprechend nachzuführen. In Figur 6 ist vorgesehen, zur Ermittlung der Führungsgröße $\varphi^*_s$ ein aus dem Stromistwert und dem Läuferstellungswinkel gespeistes Strommodell 41 zu verwenden und $\varphi^*_s$ mit einem Vektordreher 42 in das feldorientierte Koordinatensystem zu transformieren. Diese Transformation entspricht einer Winkeldifferenz-Bildung. Anstelle durch das Strommodell 41 kann die Führungsgröße $\varphi^*_s$ auch auf andere Weise, z. B. aus in der feldorientierten Steuerung gebildeten Sollwerten bestimmt werden.

Der Winkel-Nachführregler 40 liefert somit die Frequenz so, daß die Richtung des erfaßten Feldvektors im Mittel der durch $\varphi^*_s$ vorgegebenen Richtung entspricht. Die Feldfrequenz kann daher am Ausgang des Reglers 40 abgegriffen werden, während die Feldrichtung (also die eine Koordinatenachse des feldorientierten Koordinaensystems) durch Integration (Integrator 43) und anschließende Bildung der Winkelfunktionen $\cos \varphi_s$, $\sin \varphi_s$ (Funktionsgeber 44) gebildet wird. In Figur 6 ist an Hand eines Vektordrehers 36 gezeigt, daß die auf diese Weise erhaltene Richtungsinformation z. B. zur Transformation des Ständerstromvektors oder anderer Größen aus dem ständerorientierten ins feldorientierte Koordinatensystem benutzt werden kann, soweit dies die feldorientierte Steuerung der Maschine erfordert.

Da der Winkelnachführregler 40 bereits die feldorientierte Richtung des Flußvektors liefert, können die in Figur 5 zur Bestimmung dieser Richtung noch erforderlichen Elemente 2 und 11 bei dieser Schaltung entfallen. Dies führt jedoch dazu, daß damit das aus dem Ausgang des Integrators 5 abgeleitete Rückführungssignal nunmehr außer Eingriff kommt und daher nicht mehr benötigt wird. Der Integrator 5 liefert jedoch jetzt nur noch das Integral der feldparallelen EMK-Komponente, das mathematisch dem Flußbetrag nicht gleich ist. Dieser Fehler kann jedoch stationär dadurch ausgeregelt werden, daß der Integratorausgang einer Subtraktionsstelle 45 zugeführt wird, die die Regeldifferenz für einen Betragsnachführungsregler 46 liefert, dem die Betragsführungsgröße $\psi^*$ als Sollwert zugeführt ist. Das Ausgangssignal dieses Betragsnachführungsreglers 46 ist dem Eingang des Integrators 5 zusammen mit der feldorientierten EMK-Komponente $e_{\varphi 1}$ aufgeschaltet.

Mann kommt somit gemäß Figur 6 zu einer Schaltung, bei der der vom EMK-Detektor 24 gelieferte ständerorientierte EMK-Vektor $\underline{e}_s$ dadurch modifiziert wird, daß mittels des ein rotierendes orthogonales Koordinatensystem festlegenden Signals $\varphi_s$ der EMK-Vektor $\underline{e}_s$ in das rotierende Koordinatensystem transformiert wird (Vektordreher 3) und das Rückführungssignal $\Delta\psi^*$ (Ausgangssignal des Betragsnachführungsreglers 46) zur feldparallelen Komponente $e_{\varphi 1}$ des transformierten EMK-Vektors addiert wird. Der Betrag des Flußvektors wird dann durch Integration dieser modifizierten EMK-Komponente gebildet und aus der Regelabweichung des Betrages und der Betragsführungsgröße $\psi^*$ wird das Betrags-Rückführungssignal selbst ermittelt. Aus der Regelabweichung eines den Drehwinkel $\varphi_s$ des rotierenden Koordinatensystems festlegenden Signals und eines Führungssignals $\varphi^*_s$ für die Richtung des Fluß-vektors wird die Frequenz $\dot{\varphi}_s$ des Flußvektors und durch Integration dieser Frequenz das gleichzeitig den Drehwinkel und die Richtung des Flußvektors festlegende Signal $\varphi_s$ gebildet.

Im EMK-Detektor führt die Bildung des Vektors $l^\sigma \cdot d\underline{i}_s/dt$ zu Schwierigkeiten, da eine mathematisch exakte Differentiation sich schnell ändernder Größen technisch nicht durchführbar ist. In Figur 12 und Figur 13 der deutschen Offenlegungsschrift 3 034 275 ist jedoch eine Schaltung dargestellt, die durch Integration einer Größe a und anschließende Subtraktion einer Größe b mit der Integrationskonstanten t eine Größe $\overline{c}$ auszurechnen gestattet, die für den Fall, daß die Größe $\overline{c}$ mit negativem Vorzeichen dem Integratoreingang aufgeschaltet wird, durch

$$\overline{c} = (a + db/dt)/(1 + st)$$

gegeben ist, wobei durch $1/(1 + st)$ das Zeitverhalten eines Glättungsgliedes mit der Zeitkonstanten t bezeichnet ist.

Durch Anwendung dieser Schaltung auf die Komponenten der Vektoren $\underline{u}_s$ und $\underline{i}_s$ kommt man somit nach Figur 7 zu einer Schaltung, die mittels des Integrators 50, der vom Ständerwiderstandsparameter $T^s$ und dem Induktivitätsparameter $l^\sigma$ baufschlagten Multiplikatoren 51 und 52 sowie der Subtraktionsstellen 53 und 54 den Vektor

$$\overline{\underline{e}}_s = (\underline{u}_s - T^s \cdot \underline{i}_s - l^\sigma \cdot d\underline{i}_s/dt)/(1 + st)$$

auszurechnen gestattet, der den Vektor der mit der Zeitkonstanten t geglätteten EMK der Maschine darstellt.

Dieser durch die Baugruppe 55 gebildete geglättete EMK-Vektor $\overline{\underline{e}}_s$ besitzt nunmehr ein Zeitverhalten, das an sich die Bildung des Flußvektors als Integral des EMK-Vektors verfälschen würde. Wird diese Integration jedoch Komponentenweise durch Integratoren 56 durchgeführt, deren Ausgänge an der Additionsstelle 57 die Komponenten des geglätteten EMK-Vektors, multipliziert mit der Zeitkonstanten t der Glättung (bzw. dem Quotienten t/T der Zeitkonstanten), aufgeschaltet werden, so erhält man als Ausgangssignal einen Vektor

$$\frac{1}{T} \int \underline{e}_s \cdot dt = \underline{\psi}_s/T$$

also den Flußvektor der Drehfeldmaschine. Die aus Normierungsgründen bei allen Integrationen einzuführende Integrationszeitkonstante T wirkt sich hier, wie überall bei den betrachteten Schaltungen, lediglich als Proportionalitätsfaktor aus, auf den nicht näher eingegangen werden muß.

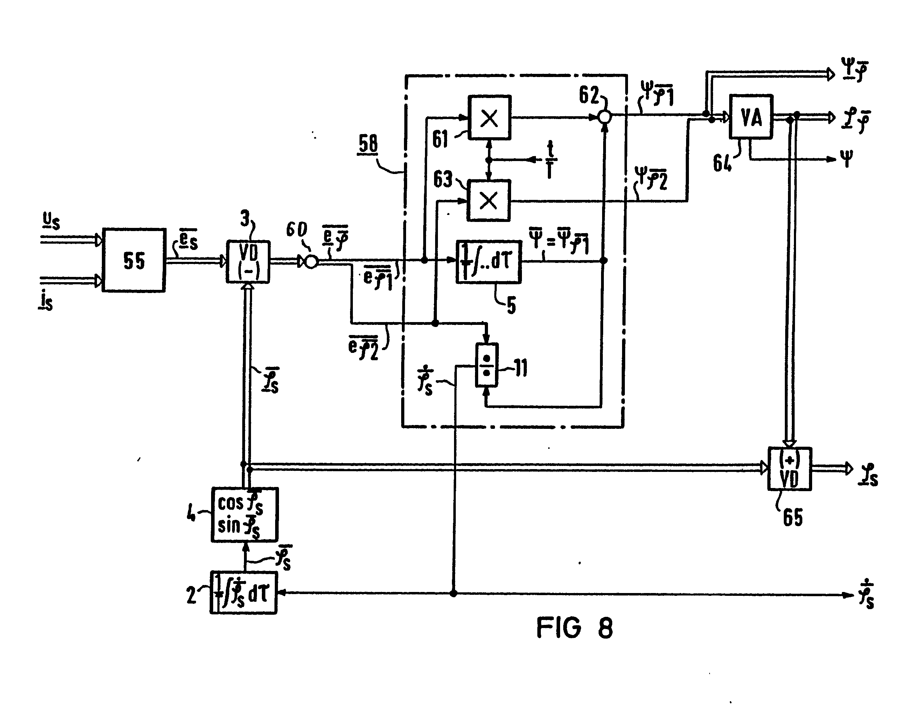

Die Integration in der Baugruppe 58 kann auch auf die bereits im Zusammenhang mit den Figuren 1 bis 4 beschriebene Weise durch Transformation des geglätteten EMK-Vektors in das rotierende Bezugssystem (Vektordreher 3) und nachfolgende Integration in diesem rotierenden Bezugssystem gebildet werden. Dies zeigt Figur 8.

Der für die Transformation am Winkelsignaleingang des Vektordrehers 3 benötigte Drehwinkel ist dabei aus dem Integral des Rückführungssignals gebildet, das als Quotienten vom Dividierer 11 aus der zweiten Komponente und der mittels des Integrators 5 integrierten ersten Komponente des an der Klemme 60 abgegriffenen modifizierten EMK-Vektors beseht. Da die Elemente 2 bis 5 und 11 das Integral des Vektors $\overline{\underline{e}}_s$ bilden, ist das Ausgangssignal des Integrators 5 der Betrag des zur geglätteten EMK gehörenden geglätteten Flußvektors $\overline{\psi}_s$. Entsprechend liefert der Integrator 2 bzw. der Funktionsgeber 4 den Richtungswinkel $\overline{\varphi}_s$ bzw. den zugehörigen Einheitsvektor $\overline{\varphi}_s$ des geglätteten Flußvektors, der bei dynamischen Vorgängen infolge der Glättungswirkung der Baugruppe 55 von der Richtung $\varphi_s$ des tatsächlichen (ungeglätteten) Flußvektors abweicht. Daher entspricht die an die Klemme 60 anliegende erste rotierende EMK-Komponente $\overline{e\varphi}_1$ der parallel zum geglätteten Fluß liegenden Komponente der geglätteten EMK, während die zweite Komponente $\overline{e\varphi}_2$ der entsprechenden zum geglätteten Flußvektor $\overline{\psi}_s$ senkrechten Komponente der geglätteten EMK entspricht.

Die Wirkung der Glättung kann nun mittels des Multiplizierers 61 und des Additionsgliedes 62 kompensiert werden, indem die vom Integrator 5 gelieferte Größe $\overline{\psi}$, die als Betrag des geglätteten Flußvektors gleich der zum geglätteten Flußvektor parallelen Komponente dieses Vektors ist, addiert wird mit der Größe $t/T \cdot e\overline{\varphi}_1$, also einem der Glättungszeitkonstante t und der ersten Komponente $(e\overline{\varphi}_1)$ des modifizierten EMK-Vektors proportionalen Signal. Dadurch wird die erste Komponente $\psi\overline{\varphi}_1$ des Flußvektors im Koordinatensystem $\overline{\varphi}1$, $\overline{\varphi}2$ gebildet. Da die zweite Komponente des geglätteten Flußvektors in diesem Koordinatensystem Null ist, kann die zweite Komponente des ungeglätteten Flußvektors direkt am Ausgang des Multiplizierers 63 als ein der Glättungszeitkonstante und der zweiten Komponente $e\overline{\varphi}_2$ des modifizierten EMK-Vektors proportionales Signal abgegriffen werden.

Infolge der Richtungsdifferenz zwischen dem geglätteten Flußvektor (Drehwinkel $\overline{\varphi}_s$) und dem tatsächlichen Flußwinkel ($\varphi_s$) stehen am Ausgang der Baugruppe 58 somit die kartesischen Komponenten des tatsächlichen Flußvektors, jedoch in einem auf den geglätteten Flußvektors orientierten Koordinatensystem, zur Verfügung. Ein Vektoranalysator 64 kann daraus den tatsächlichen Flußbetrag $\psi$ sowie die Winkeldifferenz zwischen dem tatsächlichen Flußvektor und dem geglätteten Flußvektor, also den, Winkel $\varphi_{\overline{\varphi}}$ bzw. dessen auf den geglätteten Flußwinkel orientierte kartesische Komponenten $\cos\varphi_{\overline{\varphi}}$ und $\sin\varphi_{\overline{\varphi}}$ ermitteln. Die ständerorientierte tatsächliche Flußrichtung $\varphi_s$ ergibt sich dann als Winkelsumme $\varphi_{\overline{\varphi}} + \overline{\varphi}_s$ (Vektordreher 65).

Sofern hierbei die Frequenz des tatsächlichen Flußvektors benötigt wird, so muß sie aus der Frequenz $\dot{\overline{\varphi}}_s$ des geglätteten Flußvektors und der Ableitung des Winkels $\varphi_{\overline{\varphi}}$ bestimmt werden. Die dieser Ableitung entsprechende Frequenz beträgt jedoch selten mehr als 1°/.. der geglätteten Flußfrequenz. Sofern diese Frequenz z. B. nur zur Vorsteuerung einer Winkelregelung entsprechend Figur 5 oder zu der im folgenden erläuterten Bedämpfungsschaltung benötigt wird, kann diese Zusatzfrequenz vernachlässigt werden, so daß mit guter Näherung als Flußfrequenz die Frequenz die geglätteten Flußvektors benutzt werden kann.

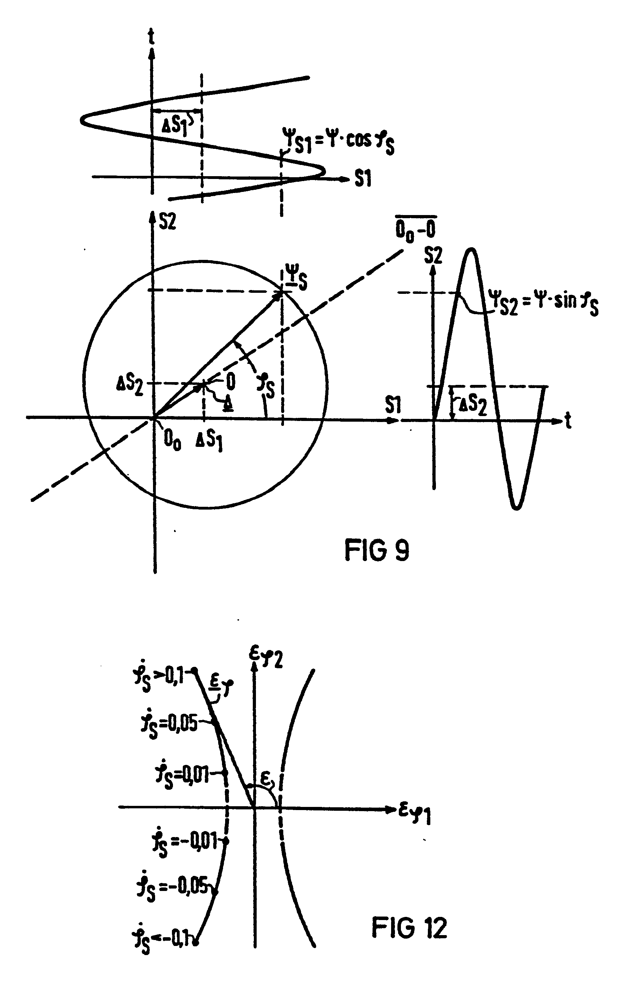

Integratoren neigen im allgemeinen zu einem Wegdriften ihres Nullpunktes und zu anderen Integrations fehlern, die sich vor allem bei niedrigen Frequenzen (stationären und quasistationären Zuständen der Drehfeldmaschine) störend bemerkbar machen. In Figur 9 ist im ständerorientierten Koordinatensystem s1, s2 die Ortskurve des Flußvektors $\psi_s$ für den Fall angegeben, daß die Drehfeldmaschine stationär arbeitet, jedoch die verwendeten Integratoren einer Nullpunktverschiebung unterliegen. Die Ortskurve des ermittelten Flußvektors liegt dann exzentrisch, d. h. der Mittelpunkt O der Ortskurve ist gegenüber dem Koordinatenursprung $O_0$ um einen Vektor $\underline{\Delta}$ verschoben, dem « Gleichanteil » des Flußvektors. Die von der Schaltung rechnerisch ermittelten Flußvektor-Komponenten sind dann Mischgrößen, bei denen die sinusförmige Bewegung der ständerorientierten kartesischen Koordinaten des tatsächlichen Maschinenflusses der jeweiligen kartesischen Komponente des Gleichanteilvektors $\underline{\Delta}$ überlagert ist. Um diesen Gleichanteil im stationären Fall zu unterdrücken, wird dem EMK-Vektor vorteilhaft ein Korrekturvektor $\delta\psi$ addiert, der aus dem Flußvektor so abgeleitet ist, daß er bei einem gleichförmigen Umlauf des Flußvektors $\psi_s$ gleich Null wird und im stationären Betrieb der Drehfeldmaschine einen Gleichanteil in der raumfesten Ortskurve des Flußvektors unterdrückt. Der Betrag des Korrekturvektors soll also proportional einer « flüchtigen Größe » des Flußvektors sein, wobei als flüchtige Größe eine bei zentrischer Ortskurve (gleichmäßigem Umlauf) verschwindende Größe des Flußvektors verstanden wird.

Eine derartige flüchtige Größe ist z. B. die Winkelbeschleunigung $\ddot{\varphi}_s$ des Flußvektors, die oberhalb der in Figur 9 gestrichelt gezeichneten Linien $\overline{O_0 \_ O}$ bei positivem Umlauf positiv und in der unterhalb $\overline{O_0 \_ O}$ liegenden Halbebene negativ ist. Eine andere, bevorzugte flüchtige Größe ist die zeitliche Ableitung $\dot{\psi}$ des Flußbetrages, wobei sich das Vorzeichen umgekehrt verhält.

Gibt man dem Korrekturvektor nun eine Richtung vor, die senkrecht zur Richtung des Flusses selbst steht, so gilt z. B. im feldorientierten Koordinatensystem

$$\delta\psi_{\varphi 1} = 0 , \quad \delta\psi_{\varphi 2} = -\dot{\psi} .$$

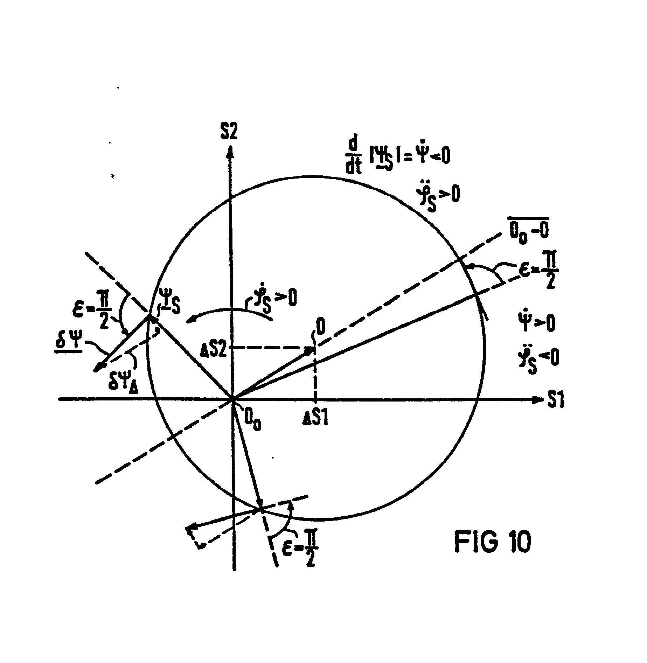

Ständerorientiert ergibt sich dann das in Figur 10 gezeigte Bild, bei dem der Korrekturvektor aus dem Flußvektor $\psi_s$ durch eine Drehung um $\varepsilon_\varphi = +\pi/2$ hervorgeht, entsprechend dem negativen Vorzeichen von $\dot{\psi}$, d. h. dem positiven Vorzeichen von $\delta\psi_{\varphi 2}$. Beim Durchgang durch die Gerade $\overline{O_0 \_ O}$ gilt $d\psi/dt = 0$ daher wird bei diesem Duchgang der Korrekturvektor $\delta\psi$ zu Null, um dann in der rechts unten liegenden Halbebene entsprechend der Vorzeichenumkehr von $\dot{\psi}$ numehr gegenüber dem Vektor $\psi_s$ um den Winkel $-\varepsilon_\varphi = -\pi/2$ gedreht zu sein.

Wie Bild 10 zeigt, mittelt sich also die zum Gleichanteilsvektor $\underline{\Delta}$ senkrechte Komponente des Korrekturvektors bei einem Umlauf längs der Ortskurve weg, während die zum Gleichanteilsvektor parallele Komponente $\delta\psi_{\underline{\Delta}}$ stets die gleiche, dem Gleichanteilsvektor entgegengesetzte Richtung aufweist.

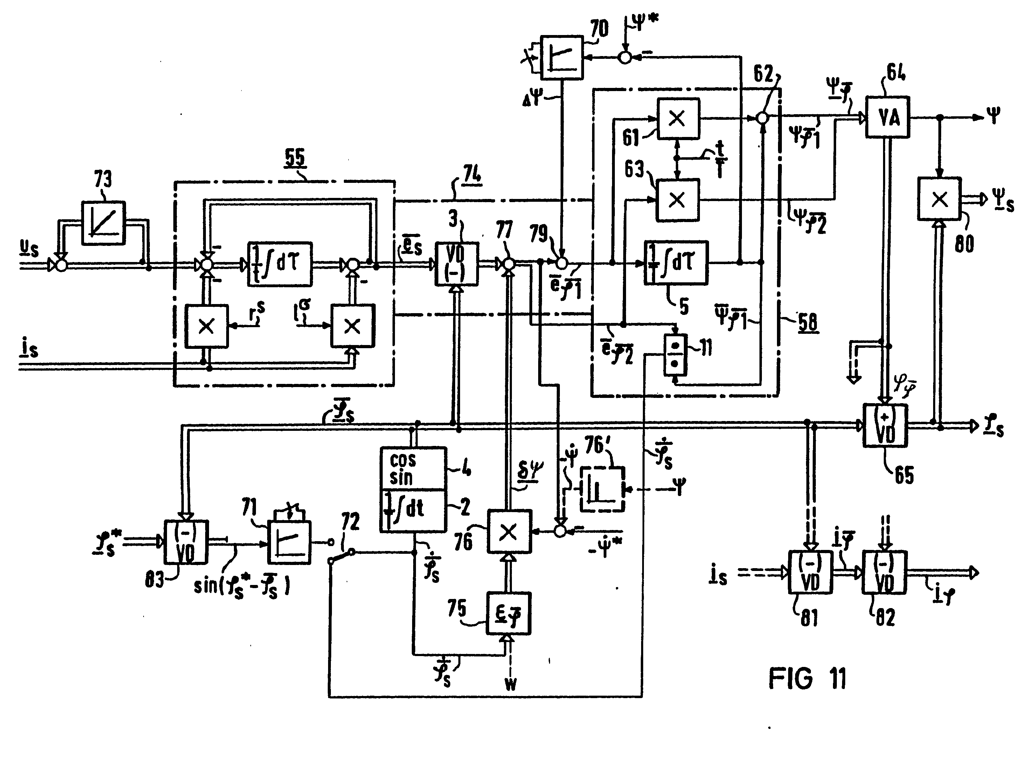

Die Aufschaltung dieses Korrekturvektors auf den Vektor der transformierten EMK am Eingang der für die Integration im feldorientierten Koordinatensystem vorgesehenen Schaltung bewirkt also, daß die Ortskurve des durch die Integration erhaltenen Flußvektors um so stärker entgegengesetzt dem Gleichanteilsvektor verschoben wird, je größer dieser Gleichanteilsvektor ist. Im stationären Zustand jedoch verschwindet der Korrekturvektor ganz und führt somit nicht zu einer statiönaren Fehlermittlung des Flusses. Eine derartige Schaltung ist in Figur 11 dargestellt.

In dieser Schaltung sind als neue Elemente ein Betragsnachführregler 70 und ein Winkelnachführregler 71 sowie ein Umschalter 72 geführt. Werden die beiden Regler 70, 71 durch Schließen ihrer Kurzschlußschalter außer Eingriff gebracht, und der Umschalter 72 in die dargestellte Stellung gelegt, so erkennt man die in Figur 8 erläuterte Konfiguration wieder. Dem EMK-Detektor 55, der aus Meßwerten von Strom und Spannung den EMK-Vektor bzw. den geglätteten Vektor $\bar{e}_s$ bildet, ist dabei eine Gleichanteilsregelung vorgeschaltet, die mit einer relativ niedrigen Verstärkung die Gleichanteile in den Komponenten des Spannungsvektors ermittelt und komponentenweise vom Spannungsvektor abzieht. Diese Gleichanteilsregelung 73 ist so schwach ausgelegt, daß sie praktisch keine Phasenverzerrung des Spannungsvektors hervorruft.

Dem EMK-Detektor ist eine Rechenstufe 74 nachgeschaltet, die den modifizierten EMK-Vektor liefert und den Vektordreher 3 enthält, der die orthogonalen EMK-Komponenten in einem rotierenden Koordinatensystem bildet, das gegenüber dem ständerorientierten Koordinatensystem um den Drehwinkel $\bar{\varphi}_s$ gedreht ist. An die Rechenstufe 74 schließt sich die Integrationsstufe 58 an, deren Integrator 5 den Betrag des Flußvektors (in diesem Fall zunächst den Betrag des geglätteten Flußvektors) liefert. Der Drehwinkel $\bar{\varphi}_s$ seinerseits wird von einem Winkelsignalbildner geliefert, der den zweiten Integrator 2 sowie, falls als Winkelsignale stets Winkelfunktionspaare verwendet werden, auch den Funktionsbildner 4 enthält. Das Eingangssignal dieses Integrators ist das von der Integrationsstufe 58 rückgeführte Signal $\dot{\bar{\varphi}}_s$, das die Frequenz des geglätteten Flußvektors angibt.

Der oben erläuterte Korrekturvektor $\underline{\delta\psi}$ wird von einem Korrekturvektorbildner geliefert. Im dem bisher betrachteten, einfachen Fall, daß $\underline{\delta\psi}$ senkrecht auf dem Flußvektor bzw. dem geglätteten Flußvektor steht und $\psi$ daher nur eine flußsenkrechte Komponente $\delta\psi_{\varphi2}$ bzw. $\delta\psi_{\bar{\varphi}2}$ enthält, braucht der Korrekturvektorbildner lediglich eine am Betragsausgang des Vektoranalysators 64 abzweigende Signalleitung mit einem Differenzierer 76' zu enthalten. Auch diese Differentiation ist im allgemeinen überflüssig, da die Ableitung des Flußbetrages im wesentlichen mit dem Eingangssignal des Integrators 5 übereinstimmt und daher der Betrag des Korrekturvektors mit hinreichender Genauigkeit an der entsprechenden Komponente des transformierten EMK-Vektors bzw. des modifizierten EMK-Vektors abgegriffen werden kann.

Durch den Korrekturvektor wird letztlich nicht nur eine Gleichanteilsregelung, sondern auch eine Dämpfung der gesamten Flußermittlungsvorrichtung erreicht. Dadurch wird allerdings die Dynamik der Flußermittlung verschlechtert. Dies kann aber dadurch vermieden werden, daß der Betrag des Korrekturvektors nicht durch $\dot{\psi}$ allein, sondern aus der Differenz $\dot{\psi}-\dot{\psi}^*$ bestimmt wird, wobei $\dot{\psi}^*$ eine Führungsgröße für die Änderung des Flusses ist. Insbesondere kann $\dot{\psi}^*$ aus dem eingangs erwähnten Strommodell oder aus den Sollwerten der Drehfeldmaschinensteuerung abgegriffen werden.

Es hat sich ferner gezeigt, daß es vorteilhaft ist, den Korrekturvektor nicht immer genau senkrecht zum Flußvektor bzw. dem geglätteten Flußvektor vorzugeben. Vor allem bei niedrigen Frequenzen ist es vorteilhaft, wenn der Korrekturvektor auch eine zum Flußvektor parallele Komponente hat. In Figur 12 ist die feldorientierte Ortskurve eines vorteilhaft vorgegebenen Steuervektors $\underline{\varepsilon}_\varphi$ für die einzelnen, jeweils angegebenen Werte der Flußfrequenz $\dot{\varphi}_s$ bzw. $\ddot{\varphi}_s$ angegeben.

Man erkennt daraus, daß bei Frequenzen über 0,1 die feldsenkrechte Komponente gegenüber der feldparallelen Komponente wesentlich überwiegt. Bei niedrigen Frequenzen verschiebt sich zwar der Winkel $\varepsilon_\varphi$ von $\approx$ 90° zu $\varepsilon_\varphi \approx$ 180°, jedoch wird der zur Frequenz Null gehörende Wert, bei dem die feldsenkrechte Komponente vollkommen verschwinden würde, nicht erreicht, da es sich hierbei um einen singulären Betriebszustand handelt, bei dem der Flußvektor nicht mehr umläuft, sondern ruht. Soll die Vorrichtung auch zur Ermittlung des Flusses im ruhenden Zustand dienen, so wird die Aufschaltung des Korrekturvektors außer Eingriff gebracht.

Die Vorgabe des Winkels $\varepsilon_\varphi$ zwischen dem Korrekturvektor $\underline{\delta\psi}$ und dem Flußvektor durch die programmierte Ortskurve nach Figur 12 bedeutet, daß dem Korrekturvektor im rotierenden Koordinatensystem der Steuervektor $\underline{\varepsilon}_\varphi$ zugrundegelegt wird, dessen Betrag durch Multiplikation mit der flüchtigen Größe modifiziert wird. Der dadurch gebildete Korrekturvektor weist somit nicht nur einen von $\varphi$ bzw. $\dot{\varphi}$ abhängigen Winkel auf, sondern sein Betrag ist über einen abenfalls von $\varphi$ abhängigen Proportionalitätsfaktor (nämlich den funktionsabhängig vorgegebenen Betrag des Steuervektors) proportional zur flüchtigen Größe.

Wird die Vorrichtung nach Figur 11 dazu benutzt, um mit dem ermittelten Flußvektor in die Steuerung der Drehfeldmaschine einzugreifen, so kann es sich als vorteilhaft erweisen, diese Ortskurve des Steuervektors $\underline{\varepsilon}_\varphi$ auch betriebsabhängig zu verändern. Insbesondere kann es vorteilhaft sein, den Steuervektor $\underline{\varepsilon}_\varphi$ als Funktion des Lastzustandes, z. B. des Winkels zwischen Strom und Spannung der Drehfeldmaschine, oder einer anderen Zustandsgröße W der Maschine zu verändern.

Der Eingriff über die Zustandsgröße W kann gegebenfalls so wirken, daß der Korrekturvektor nach Mitteilung über einen Umlauf des Flußvektors auf der Ortskurve dem Gleichanteilsvektor nicht mehr antiparallel ist und daher dieser Gleichanteilsvektor nicht korrekt ausgeregelt wird, aber trotzdem durch die Wechselwirkung mit der Maschine und ihrer Steuerung ein stabiler stationärer Maschinenbetrieb erreicht wird.

Der negative Zweig ($\varepsilon_{\varphi2} <$ 0) in der Ortskurve nach Figur 12 betrifft den Fall, daß der Fluß in mathematisch negativem Sinn umläuft. In diesem Fall ist in der exzentrischen Ortskurve nach Figur 10 in der linken oberen Halbene die Größe $\dot{\psi}$ positiv und in der anderen Halbebene negativ, so daß sich auch hierbei in beiden Halbebenen die gleiche Richtung des Steuervektors ergibt.

Die der Figur 12 entsprechende Vorgabe des Steuervektors $\underline{\varepsilon}_\varphi$ bzw. $\underline{\varepsilon}_{\overline{\varphi}}$ kann demnach bei der Vorrichtung nach Figur 11 durch einen Funktionsspeicher 75 (PROM) geschehen, der vom Eingangssignal $\dot{\overline{\varphi_s}}$ des zweiten Integrators 2 und gegebenenfalls vom Lastwinkel der Drehfeldmaschine oder einer anderen Betriebsgröße W der Drehfeldmaschine angesteuert wid. Dieser Steuervektor kann sodann komponentenweise mit — $\psi$ bzw. $\overline{e\varphi}_1$ oder mit einer mittels Führungsgröße $\dot\psi^*$ gebildeten Differenz multipliziert werden, um anschließend einer Additionsstelle 77 in der Rechenschaltung 74 zugeführt zu werden. Unter Umständen sind dabei je nach motorischen oder generatorischen Betrieb auch Winkel $|\varepsilon_c| < 90°$ möglich.

Die Ausgänge der Integrationsstufe 58 stellen, wie schon erläutert wurde, die auf den geglätteten Flußvektor orientierten kartesischen Komponenten des ungeglätteten Flußvektors dar. Die Umrechnung der kartesischen Komponenten in polare Komponenten bzw. die Umrechnung in andere Koordinatensysteme bereitet keine Schwierigkeiten. Der Vektoranalysator 64 z. B. ermittelt die Betragskoordinate $\psi$ und die (als Einheitsvektor verarbeitete) Winkelkoordinate $\varphi_{\overline{\varphi}}$. Der Vektordreher 65 bildet daraus die Ständerorientierte Winkelkoordinate $\varphi_s = \overline{\varphi}_s + \varphi_{\overline{\varphi}}$, und ein Multiplizierer 80 kann aus dieser als Einheitsvektor dargestellten Winkelkoordinate und der Betragskoordinate $\psi$ die ständerorientierten kartesischen Koordinaten des Vektors $\underline{\psi}_s$ liefern. Ferner ist in Figur 11 dargestellt, daß ein Istvektor oder ein Sollvektor (z. B. bei einer Drehfeldmaschinensteuerung entsprechend Figur 6 der Ständerstromvektor $\underline{i}_s$) durch Transformation mittels des von $\overline{\varphi_s}$ beaufschlagten Vektordrehers 81 ins $\overline{\varphi}$-Koordinatensystem und mittels eines Vektordrehers 82 ins flußorientierte Koordinatensystem transformiert werden kann, um nachher in der Drehfeldmaschinensteuerung weiter verarbeitet zu werden.

Legt man nun den Umschalter 72 aus der dargestellten Stellung in die andere Stellung um, so erhält man die Konfiguration der figur 6, bei der der Dividierer 11 nicht mehr im Eingriff ist. Als Winkelbildner zur Bildung des Drehwinkels $\overline{\varphi_s}$ wirkt jetzt zwar noch immer der Integrator 2, dem jetzt aber der Winkelnachführregler 71 vorgeschaltet ist. Wird dieser durch Öffnen seines Schalters aktiviert, so regelt er den Drehwinkel $\overline{\varphi}_s$ auf den (z. B. vom Strommodell vorgegebenen) Führungswinkel $\varphi_s^*$ aus, indem er die Frequenz $\dot{\overline{\varphi}}_s$ für den vom Integrator 2 gebildeten Drehwinkel $\overline{\varphi}_s$ verstellt. Da bei dieser Anordnung die Winkel als Winkelsignalpaare verwendet werden, wird die Winkeldifferenz von einem Vektordreher 83 gebildet, von dem aber für die Ansteuerung des Winkelnachführreglers 71 nur eine Komponente, z. B. die Komponente $\sin(\varphi_s^* - \overline{\varphi}_s)$ benötigt wird.

Wie bereits erläutert wurde, ist in diesem Fall vorgesehen, auch den Betragsnachführregler 70 durch Öffnen seines Kurzschlußschalters zu aktivieren. Dieser Regler regelt die Differenz $\psi^* - \psi$ entsprechend einer Betragsführungsgröße $\psi^*$ und dem am Ausgang des Integrators 5 abgegriffenen Flußbetrag $\psi$ dadurch aus, daß er der Komponente $\overline{e\varphi}_1$ des modifizierten EMK-Vektors sein Regler-Ausgangssignal aufschaltet.

In dieser Schalterstellung ist eine gemäß Figur 11 vorgesehene Glättung der EMK und die nachfolgende Korrektur in der Integrationsstufe 58 weiterhin im Eingriff. Ebenso kann, falls dies wünschenswert ist, auch die durch den Korrekturvektor vorgenommene Dämpfung eingeschaltet bleiben. Diese Schalterstellung ist insbesondere bei niedrigen Frequenzen in der Drehfeldmaschine vorgesehen. Auch dann bestimmen im wesentlichen die Führungsgrößen die Ermittlung des Flusses. Fehler, die von dem geringen Pegel der Spannungsmeßwerte herführen, machen sich im stationären Fall nicht bemerkbar, während jedoch die gute Dynamik des Spannungsmodells praktisch erhalten bleibt.

Die Vorrichtung nach der Erfindung kann sowohl unabhängig von der Steuerung einer Drehfeldmaschine benutzt werden, um den Fluß der Drehfeldmaschine für Justierungs- und Kontrollzwecke zu überwachen. Sie kann auch angewendet werden, um im oberen Frequenzbereich in die Maschinensteuerung einzugreifen, im unteren Drehzahlbereich aber, falls die Maschine dann auf andere Weise (z. B. mittels eines Strommodells) gesteuert wird, im Bereitschaftsbetrieb mitzulaufen. Durch geeignete Vorgabe der Führungsgrößen $\varphi_s^*$, $\psi^*$ und $\dot\psi^*$ kann erreicht werden, daß im unteren Drehzahlbereich, in dem der niedrige Spannungspegel der Spannungswerte an sich die Verwendung des Spannungsmodells erschwert, das Spannungsmodell stationär von den Führungsgrößen (z. B. einem Strommodell) bestimmt wird, wobei das Spannungsmodell dynamische Abweichungen vom stationären Zustand dynamisch richtig erfaßt. Der Übergang von dem durch die Führungsgrößen geführten Zustand in den ungeführten Zustand kann dabei diskontinuierlich durch einfaches Umschalten des Schalters 72 in den in Figur 11 dargestellten Zustand geschehen, es ist aber auch ein kontinuierlicher Übergang möglich, bei dem der Schalter 72 alternierend mit einem frequenzabhängigen Tastverhältnis geschaltet wird.

## Patentansprüche

1. Verfahren zum Bestimmen des Flußvektors ($\varphi$, $\varphi_s$) einer Drehfeldmaschine (21) aus Ständerstrom ($\underline{i}_s$) und Ständerspannung ($\underline{u}_s$) mit folgenden Schritten :

   a) aus Meßwerten von Strom ($\underline{i}_s$) und Spannung ($\underline{u}_s$) werden die des ständerbezogenen Komponenten EMK-Vektors ($\underline{e}_s$) der Maschine gebildet,

   b) der EMK-Vektor wird mittels eines aus dem ermittelten Flußvektor abgeleiteten Rückführungssignals ($\dot\varphi_s$) modifiziert und

   c) durch Integration des modifizierten EMK-Vektor ($\underline{e}_\varphi$) wird der Flußvektor gebildet,

gekennzeichnet durch folgende weitere Merkmale :

d) der modifizierte EMK-Vektor wird durch orthogonale EMK-Komponenten in einem mit steuerbarer Frequenz rotierenden Koordinatensystem festgelegt,

e) der Betrag ($\psi$) des Flußvektors wird durch Integration der ersten rotierenden EMK-Komponente ($e_{\varphi1}$) gebildet, und

f) das Rückführungssignal wird aus dem Quotienten der zweiten rotierenden EMK-Komponente ($e_{\varphi2}$) und dem Betrag ($\psi$) des Flußvektors als Frequenz ($\dot{\varphi}_s$) des Flußvektors gebildet und durch Integration der Frequenz ($\dot{\varphi}_s$) wird ein gleichzeitig den Drehwinkel ($\varphi_s$) des rotierenden Koordinatensystems und die Richtung des Flußvektors festlegendes Winkelsignal ($\underline{\varphi}_s$) gebildet (Fig. 5).

2. Verfahren zum Bestimmen des Flußvektors ($\underline{\psi}_s$) einer Drehfeldmaschine aus Ständerstrom ($\underline{i}_s$) und Ständerspannung ($\underline{u}_s$) mit folgenden Merkmalen :

a) aus Meßwerten von Strom und Spannung werden die ständerbezogen Komponenten des EMK-Vektors ($\underline{e}_s$) der Maschine gebildet,

b) der EMK-Vektor ($\underline{e}_s$) wird mittels eines aus dem ermittelten Flußvektor abgeleiteten Rückführungssignals ($\dot{\varphi}_s$) modifiziert, und

c) durch Integration des modifizierten EMK-Vektors ($\underline{e}_\varphi$) wird der Flußvektor ($\underline{\psi}_s$) gebildet, gekennzeichnet durch folgende weitere Merkmale :

d) der modifizierte EMK-Vektor wird durch die Summe ($e_{\varphi1} + \Delta\psi^*$) einer ersten orthogonalen EMK-Komponente ($e_{\varphi1}$) in einem rotierenden Koordinatensystem und einem ersten Rückführungssignal ($\Delta\psi^*$) sowie durch eine zweite orthogonale Komponente ($e_{\varphi2}$) im rotierenden Koordinatensystem festgelegt,

e) der Betrag ($\psi$) des Flußvektors wird durch Integration der ersten modifizierten EMK-Komponente ($e_{\varphi1} + \Delta\psi^*$) und das erste Rückführungssignal ($\Delta\psi^*$) wird aus der Regelabweichung ($\psi^* - \psi$) des Betrags und einer Betragsführungsgröße ($\psi^*$) gebildet und

f) ein zweites Rückführungssignal ($\dot{\varphi}_s$) wird aus der Regelabweichung eines den Drehwinkel ($\varphi_s$) des rotierenden Koordinatensystems festlegenden Signals ($\varphi_s$) und eines Winkelführungssignals ($\varphi_s^*$) für die Richtung des Flußvektors als Frequenz ($\dot{\varphi}_s$) des Flußvektors gebildet und durch Integration der Frequenz wird ein gleichzeitig den Drehwinkel ($\varphi_s$) und die Richtung des Flußvektors festlegendes Winkelsignal ($\underline{\varphi}_s$) gebildet (Fig. 6).

3. Verfahren nach Anspruch 1 oder 2, dadurch gekennzeichnet, daß durch Transformation eines aus den Meßwerten von Strom und Spannung gebildeten, einer geglätteten EMK entsprechenden Vektors ($\underline{e}_s$) die orthogonalen EMK-Komponenten in rotierenden Koordinatensystem gebildet werden, und daß durch Addition (Additionsglied 62) der integrierten ersten Komponente ($\overline{e_{\varphi1}}$) des modifizierten EMK-Vektors und eines der Glättungszeitkonstante (t) und der ersten Komponente des modifizierten EMK-Vektors proportionalen Signals (Multiplizierer 61) die erste kartesische Komponente ($\psi_{\overline{\varphi1}}$) und aus einem der Glättungszeitkonstante (t) und der zweiten kartesischen Komponente ($\overline{e_{\varphi2}}$) des modifizierten EMK-Vektors ($\overline{e_\varphi}$) proportionalen Signal (Multiplizierer 63) die zweite kartesische Komponente ($\psi_{\overline{\varphi2}}$) des Flußvektors ($\underline{\psi}_\varphi$) im rotierenden Koordinatensystem gebildet wird (Fig. 8).

4. Verfahren nach einem der Ansprüche 1 bis 3, dadurch gekennzeichnet, daß zum transformierten EMK-Vektor ein Korrekturvektor ($\delta\psi$) addiert wird, der aus dem Flußvektor abgeleitet ist und bei stationärem Betrieb der Drehfeldmaschine einen Gleichanteil in der raumfesten Ortskurve des Flußvektors unterdrückt (Fig. 11).

5. Verfahren nach Anspruch 4, dadurch gekennzeichnet, daß dem Korrekturvektor ($\delta\psi$) eine vorbestimmte Richtungsdifferenz gegenüber dem Flußvektor und ein Betrag vorgegeben wird (Multiplizierer 76), der proportional einer bei zentrischer Ortskurve verschwindenden Größe ($-\dot{\psi}$ bzw. $-\overline{e\varphi_2}$) des Flußvektors ist (Fig. 11).

6. Verfahren nach Anspruch 5, dadurch gekennzeichnet, daß der Korrekturvektor so vorgegeben wird, daß er — gemittelt über einen Umlauf auf der Ortskurve — dem Gleichanteil in der raumfesten Ortskurve entgegengerichtet ist (Fig. 11).

7. Verfahren nach Anspruch 5, dadurch gekennzeichnet, daß der Betrag des Korrekturvektors mit einem vorgegebenen Proportionalitätsfaktor, insbesondere einem als Funktion der Frequenz ($\overline{\varphi}_s$) des Flußvektors und/oder einer Zustandsgröße (W) der Drehfeldmaschine bestimmten Proportionalitätsfaktor, proportional zur Ableitung des Flußbetrages ($\dot{\psi}$) oder proportional der ersten orthogonalen EMK-Komponente ($\overline{e_{\varphi1}}$) des transformierten EMK-Vektors oder proportional der Differenz ($\dot{\psi} - \dot{\psi}^*$ bzw. $\overline{e_{\varphi1}} - \dot{\psi}^*$) der Ableitung oder der ersten Komponente des transformierten EMK-Vektors und einer instationären Führungsgröße ($\dot{\psi}^*$), ist (Fig. 11).

8. Verfahren nach Anspruch 5, dadurch gekennzeichnet, daß der Richtung des Korrekturvektors eine zum Flußvektor senkrechte Komponente vorgegeben wird, die von der Frequenz des Flußvektors, insbesondere von der Frequenz des Flußvektors und einer Zustandsgröße der Drehfeldmaschine abhängig ist und für Frequenzen ungleich Null nicht verschwindet (Fig. 12).

9. Verfahren nach Anspruch 6 und 7, dadurch gekennzeichnet, daß die flußsenkrechte Komponente positiv bzw. negativ ist, abhängig vom Vorzeichen des Produktes aus Flußfrequenz und Betrag des Korrekturvektors (Fig. 10).

10. Verfahren nach Anspruch 2 oder Anspruch 7, dadurch gekennzeichnet, daß die Führungsgrößen aus Sollwerten der Maschine oder durch Nachbildung des Flusses aus Istwerten für Strom und Läuferstellung der Maschine gebildet werden.

11. Anwendung nach einem der Ansprüche 1 bis 10 des Verfahrens zum feldorientierten Betrieb einer umrichtergespeisten Drehfeldmaschine, wobei die Lage des Flusses bestimmt und der Umrichter in Abhängigkeit von der bestimmten Flußlage so gesteuert wird, daß die zum Fluß parallele Komponente und die dazu senkrechte Komponente des Ständerstroms unabhängig beeinflußbar sind (Fig. 5).

12. Vorrichtung zum Bestimmen des Flusses einer Drehfeldmaschine aus Spannung und Strom, mit
a) einem EMK-Detektor (55), der aus Meßwerten von Strom ($\underline{i}_s$) und Spannung ($\underline{u}_s$) die ständerbezogenen Komponenten eines EMK-Vektors ($\underline{e}_s$) bildet,
b) einer Rechenstufe (74), die mittels eines aus dem Flußvektor abgeleiteten Rückführungssignals ($\dot{\overline{\varphi}_s}$) einen modifizierten EMK-Vektor ($\overline{e_\varphi}$) bildet, und
c) einer Integrationsstufe (58), die durch Integration des modifizierten EMK-Vektors den Flußvektor ($\underline{\psi}_\varphi$) bildet,
dadurch gekennzeichnet, daß
d) die Rechenstufe Mittel (3, 79) zur Bildung der orthogonalen EMK-Komponenten in einem rotierenden Koordinatensystem enthält,
e) daß die Integrationsstufe zur Bildung eines ersten Integratorsignals ($\overline{\psi_{\varphi 1}}$) einen ersten Integrator (5) enthält, dem die erste orthogonale EMK-Komponente ($e_{\varphi 1}$) zugeführt wird und dessen Ansgangssignal die erste Komponente des Flußvektors im rotierenden Bezugssystem bzw. bei flußparalleler Koordinatenachse die Betragskoordinate des Vektors bestimmt, und
f) daß ein Winkelsignalbildner (2, 4) mit einem zweiten Integrator (2) zur Bildung eines zweiten Integratorsignals vorgesehen ist, wobei der zweite Integrator (2) von dem aus einer Größe des ermittelten Flußvektors abgeleiteten und der Frequenz des Flußvektors zugeordneten Rückführungssignal ($\dot{\overline{\varphi}_s}$) beaufschlagt ist und das zweite Integratorsignal ($\overline{\varphi}_s$) als Drehwinkel des rotierenden Koordinatensystems der Rechenstufe (74) zugeführt ist (Fig. 11).

13. Vorrichtung nach Anspruch 12, dadurch gekennzeichnet, daß die Integrationsstufe (58) einen Dividierer (11) zur Bildung des Quotienten aus der zweiten orthogonalen EMK-Komponente und dem ersten Integrationssignal enthält und daß das Ausgangssignal ($\dot{\overline{\varphi}_s}$) des Dividierers dem Eingang des zweiten Integrators (2) und das zweite Integratorsignal einer Ausgabeeinrichtung (65, 80) für den Winkel oder die kartesischen Komponenten des Flußvektors zugeführt ist (Fig. 11).

14. Vorrichtung nach Anspruch 12 oder 13, gekennzeichnet durch einen Korrekturvektorbildner (75, 76) zur Vorgabe eines Korrekturvektors ($\delta\psi$), der gegenüber dem Flußvektor gedreht, insbesondere dem Flußvektor nicht parallel ist und im stationären Zustand verschwindet, und Mittel (77) zur Addition von EMK-Vektor und Korrekturvektor (Fig. 11).

15. Vorrichtung nach Anspruch 14, gekennzeichnet durch Mittel zur Bildung einer der Ableitung ($\dot{\psi}$) des Flusses ungefähr proportionalen Größe aus der ersten Komponente des modifizierten EMK-Vektors oder dem Betrag des Flußvektors und nachgeordnete betragsbildende Mittel (76) zur Bestimmung des Betrages des Korrekturvektors (Fig. 11).

16. Vorrichtung nach Anspruch 14 oder 15, gekennzeichnet durch einen von der Frequenz des Flußvektors oder des rotierenden Bezugssystems und vorzugsweise auch einer den Lastzustand der Maschine kennzeichnenden Größe (W) beaufschlagten Steuervektorbildner (75), der in funktionaler Abhängigkeit seiner Eingangsgrößen die Komponenten eines Steuervektors im rotierenden Bezugssystem festlegt, und eine Multiplikationsstufe (76), die durch Multiplikation des Steuervektors mit einer betragsbestimmenden Größe den Korrekturvektor liefert (Fig. 11).

17. Vorrichtung nach Anspruch 12, dadurch gekennzeichnet, daß der Winkelsignalbildner (2, 4) einem dem zweiten Integrator (2) vorgeschalteten Winkelnachführregler (71), der von der Differenz zwischen dem Drehwinkel ($\overline{\varphi}_s$) und einem Führungsdrehwinkel ($\varphi_s*$) beaufschlagt ist, zur Bildung des Rückführungssignals ($\dot{\overline{\varphi}_s}$) enthält, daß ein vom ersten Integratorsignal und einem Führungsbetrag ($\psi*$) beaufschlagter Betragsnachführregler (70) ein weiteres Rückführungssignal ($\Delta\psi$) bildet und daß die Rechenstufe (74) ein Additionsglied (79) für das weitere Rückführungssignal und die erste orthogonale EMK-Komponente enthält.

18. Vorrichtung nach Anspruch 17 und einem der Ansprüche 13 bis 16, gekennzeichnet durch Umschaltmittel (72), durch die der Eingang des zweiten Integrators (2) wahlweise oder alternierend zwischen dem Ausgang des Dividierers (11) und des Winkelnachführreglers (71) umschaltbar ist.

19. Vorrichtung nach einem der Ansprüche 12 bis 18, dadurch gekennzeichnet, daß der EMK-Detektor (55) Mittel zur Bildung eines geglätteten EMK-Vektors ($\overline{e}_s$) enthält, der der Rechenstufe (74) zur Transformation ins rotierende Bezugssystem zugeführt wird, daß aus dem ersten Integratorsignal ($\overline{\psi_{\varphi 1}}$) und einem am Rechenstufenausgang für die erste orthogonale EMK-Komponente abgegriffenen, der Glättungszeitkonstante (t) proportionalen Signal (Multiplizierer 61) eine erste kartesische Komponente ($\psi_{\varphi 1}$) des Flußvektors im rotierenden Bezugssystem und ein am Rechenstufenausgang für die zweite orthogonal EMK-Komponente abgegriffenes, der Glättungszeitkonstante proportionales Signal (Multiplizierer 63) als zweite kartesische Komponente ($\psi_{\varphi 2}$) des Flußvektors im rotierenden Bezugssystem gebildet werden.

20. Vorrichtung nach Anspruch 18, gekennzeichnet durch Mittel (65, 80) zur Transformation des Flußvektors ins ständerorientierte Koordinatensystem.

21. Vorrichtung nach einem der Ansprüche 11 bis 19, gekennzeichnet durch eine dem Spannungseingang des EMK-Detektors vorgeschaltete Einrichtung (73) zur Unterdrückung von Gleichspannungen.

22. Vorrichtung nach einem der Ansprüche 11 bis 20, dadurch gekennzeichnet, daß der Drehwinkel ($\varphi_s$) des rotierenden Koordinatensystems Mitteln (81, 82) zur Koordinatentransformation von Ist- und/oder Sollvektoren zugeführt ist und daß die transformierten Ist- und/oder Sollvektoren der Steuerungseinrichtung eines den Ständerstrom der Drehfeldmaschine liefernden Umrichters zugeführt sind.

**Claims**

1. A method for determining the flow vector ($\psi$, $\underline{\theta}_s$) of an induction machine (21) from the stator current ($\underline{i}_s$) and stator voltage ($\underline{u}_s$) comprising the following steps :

a) the stator-related components of the EMK vector ($\underline{e}_s$) of the machine are formed from the measured values of current ($\underline{i}_s$) and voltage ($\underline{u}_s$) ;

b) the EMK vector is modified by means of a return signal ($\dot{\theta}_s$) derived from the determined flow vector ; and

c) the flow vector is formed by integration of the modified EMK vector ($\underline{e}_\theta$) ; characterised by the following further features :

d) the modified EMK vector is determined by orthogonal EMK components in a controllable frequency rotating coordinate system ;

e) the value ($\psi$) of the flow vector is formed by integration of the first rotating EMK component ($e_{\theta 1}$) ; and

f) the return signal is formed from the quotient of the second rotating EMK component ($e_{\theta 2}$) and the value ($\psi$) of the flow vector as frequency ($\dot{\theta}_s$) of the flow vector and by integration of the frequency ($\dot{\theta}_s$) there is formed an angle signal ($\underline{\theta}_s$) which simultaneously determines the angle of rotation ($\theta_s$) of the rotating coordinate system and the direction of the flow vector (Fig. 5).

2. A method for determining the flow vector ($\underline{\psi}_s$) of an induction machine from the stator current ($\underline{i}_s$) and the stator voltage ($\underline{u}_s$) comprising the following features :

a) the stator-related components of the EMK vector ($\underline{e}_s$) of the machine are formed from the measured values of current and voltage ;

b) the EMK vector ($\underline{e}_s$) is modified by means of a return signal ($\dot{\theta}_s$) derived from the determined flow vector ; and

c) the flow vector ($\underline{\psi}_s$) is formed by integration of the modified EMK vector ($\underline{e}_\theta$) ; characterised by the following further features :

d) the modified EMK vector is determined by the sum ($e_{\theta 1} + \Delta\psi^*$) of a first orthogonal EMK component ($e_{\theta 1}$) in a rotating coordinate system and a first return signal ($\Delta\psi^*$) and by a second orthogonal component ($e_{\theta 2}$) in the rotating coordinate system ;

e) the value ($\psi$) of the flow vector is formed by integration of the first modified EMK component ($e_{\theta 1} + \Delta\psi^*$) and the first return signal ($\Delta\psi^*$) is formed from the deviation ($\psi^* - \psi$) of the value and a value reference variable ($\psi^*$) ; and

f) a second return signal ($\dot{\theta}_s$) is formed from the deviation of a signal ($\underline{\theta}_s$), which determines the angle of rotation ($\theta_s$) of the rotating coordinate system, and of an angle guide signal ($\underline{\theta}_s^*$) for the direction of the flow vector as frequency ($\dot{\theta}_s$) of the flow vector and by integration of the frequency, an angle signal ($\underline{\theta}_s$) is formed which simultaneously determines the angle of rotation ($\theta_s$) and the direction of the flow vector. (Fig. 6).

3. A process as claimed in Claim 1 or 2, characterised in that the orthogonal EMK components in the rotating coordinate system are formed by transformation of a vector ($\underline{e}_s$) formed from the measured values of the current and the voltage, and which corresponds to a smoothed EMK, and that by a addition (addition element 62) of the integrated first component ($\overline{e_{\theta 1}}$) of the modified EMK vector and a signal (multiplier 61) proportional to the smoothing time constant (t) and the first component of the modified EMK vector, the first Cartesian component ($\psi_{\theta 1}$) is formed and from a signal (multiplier 63) proportional to the smoothing time constant (t) and the second Cartesian component ($\overline{e_{\theta 2}}$) of the modified EMK vector ($\overline{e_\theta}$) is formed the second Cartesian component ($\psi_{\theta 2}$) of the flow vector ($\underline{\psi}_\theta$) in the rotating coordinate system. (Fig. 8).

4. A process as claimed in one of Claims 1 to 3, characterised in that a correction vector ($\delta\psi$) is added to the transformed EMK vector, which correction vector is derived from the flow vector and suppresses a component in the stationary location curve of the flow vector during stationary operation of the induction machine. (Fig. 11).

5. A process as claimed in Claim 4, characterised in that the correction vector ($\delta\psi$) is given a predetermined direction difference relative to the flow vector and a value (multiplier 76), which is proportional to a variable ($-\dot{\psi}$) or $-\overline{e_{\theta 2}}$ as the case may be) of the flow vector which vanishes in the case of a central curve. (Fig. 11).

6. A process as claimed in Claim 5, characterised in that the correction vector is determined such that it is opposed to the portion in the space-bound curve averaged via a circulation on the curve. (Fig. 11).

7. A process as claimed in Claim 5, characterised in that the value of the correction vector together with a predetermined proportionality factor, in particular a proportionality factor determined as a function of the frequency $(\overline{\dot{\psi}_s})$ of the flow vector and/or a state variable (W) of the induction machine, is proportional to the derivation of the flow value $(\dot{\psi})$ or proportional to the first orthogonal EMK component $(\overline{e_{s1}})$ of the transformed EMK vector or proportional to the difference $(\dot{\psi} - \dot{\psi}^*$ or $\overline{e_{s1}} - \dot{\psi}^*$ as the case may be) of the derivation or the first component of the transformed EMK vector and a non-steady guide variable $(\dot{\psi}^*)$. (Fig. 11).

8. A process as claimed in Claim 5, characterised in that the direction of the correction vector is given a component which is at right angles to the flow vector and is dependent upon the frequency of the flow vector, in particular upon the frequency of the flow vector and a state variable of the induction machine, and does not vanish for frequencies different from zero. (Fig. 12).

9. A process as claimed in Claim 6 and 7, characterised in that the component which is at right angles to the flow is positive or negative, as the case may be, in dependence upon the symbol of the product from the flow frequency and value of the correction vector. (Fig. 10).

10. A process as claimed in Claim 2 or Claim 7, characterised in that the guide variables as formed from theoretical values of the machine or by simulation of the flow from actual values for the current and rotor position of the machine.

11. Use of the process as claimed in one of Claims 1 to 10 for the field-oriented operation of an inverter-fed induction machine, where the position of the flow is determined and the inverter is controlled in dependence upon the determined flow position in such a manner that the component parallel to the flow and the component of the stator current which is at right angles thereto, can be independently influenced. (Fig. 5).

12. A device for determining the flow of an induction machine from voltage and current, comprising :
   a) an EMK detector (55) which forms the stator-related components of an EMK vector $(e_s)$ from the measured values of current $(i_s)$ and voltage $(e_s)$ ;
   b) a calculating stage (74) which forms a modified EMK vector $\overline{(e_s)}$ by means of a return signal $(\overline{\theta_s})$ derived from the flow vector ; and
   c) an integration stage (58) which forms the flow vector $(\dot{\psi}_s)$ by integration of the modified EMK vector ;
characterised in
   d) that the calculating stage comprises means (3, 79) for forming the orthogonal EMK components in a rotating coordinate system ;
   e) that in order to form a first integration signal $(\overline{\psi_{s1}})$ the integration stage comprises a first integrator (5), to which the first orthogonal EMK component $(\overline{e_{s1}})$ is supplied, and whose output signal determines the first component of the flow vector in the rotating reference system or in the event of a flow-parallel coordinate axis the value coordinate of the vector ; and
   f) that an angle signal former (2, 4) is provided having a second integrator (2) for forming a second integrator signal, where the second integrator (2) is acted upon by the return signal $(\overline{\dot{\psi}_s})$ derived from a variable of the determined flow vector and assigned to the frequency of the flow vector and the second integrator signal $(\overline{\theta_s})$ is supplied to the calculating stage (74) as the angle of rotation of the rotating coordinate system. (Fig. 11).

13. A device as claimed in Claim 12, characterised in that the integration stage (58) comprises a divider (11) for forming the quotient of the second orthognal EMK component and the first integration signal and that the output signal $(\dot{\theta}_s)$ of the divider is fed to the input of the second integrator (2) and the second integrator signal is supplied to an output device (65, 70) for the angle or the Cartesian components of the flow vector. (Fig. 11).

14. A device as claimed in Claim 12 or 13, characterised by a correction vector former (75, 76) for determining a correction vector $(\delta\psi)$ which compared to the flow vector is rotated, and in particular not parallel to the flow vector and vanishes in the stationary state, and by means (77) for adding EMK vector and correction vector. (Fig. 11).

15. A device as claimed in Claim 14, characterised by means for forming a variable, which consists of the first component of the modified EMK vector or the value of the flow vector and is approximately proportional to the derivation $(\dot{\psi})$ of the flow, and by following means (76) for determining the value of the correction vector. (Fig. 11).

16. A device as claimed in Claim 14 or 15, characterised by a control vector former (75) acted upon by the frequency of the flow vector or of the rotating reference system and preferably of a variable (W) characterising the load state of the machine and which determines the components of a control vector in the rotating reference system as a functional dependence of its input variables, and a multiplication stage (76) which supplies the correction vector by multiplication of the control vector with a value-determining variable. (Fig. 11).

17. A device as claimed in Claim 12, characterised in that the angle signal former (2, 4) comprises an angle follow-up regulator (71) which precedes the second integrator (2) and is acted upon by the difference between the angle of rotation $(\overline{\theta_s})$ and a guide rotary angle $(\theta_s^*)$, in order to form the return signal $(\overline{\theta_s})$, that a value follow-up regulator (70), acted upon by the first integrator signal and a guide value $(\psi^*)$, forms a further return signal $(\Delta\psi)$, ant that the calculating stage (74) comprises an addition element (79) for the further return signal and the first orthogonal EMK component.

18. A device as claimed in Claim 17 and one of Claims 13 to 16, characterised by switching means (72), by which the input of the second integrator (2) can be alternatively or alternately changed-over between the output of the divider (11) and the angle follow-up regulator (71).

19. A device as claimed in one of Claims 12 to 18, characterised in that the EMK detector (55) comprises means for forming a smoothed EMK vector $(\underline{e}_s)$ supplied to the calculating stage (74) for the transformation into the rotating reference system, that as a second Cartesian component $(\psi_{\overline{S2}})$ of the flow vector in the rotating reference system are formed from the first integrator signal $(\overline{u_{\theta 1}})$ and a signal (multiplier 61) tapped at the output of the calculating stage for the first orthogonal EMK component and proportional to the smoothing time constant (t), a first Cartesian component $(\psi_{\overline{S1}})$ of the flow vector in the rotating reference system and a signal (multiplier 63) tapped at the output of the calculating stage for the second orthogonal component and proportional to the smoothing time constant.

20. A device as claimed in Claim 18, characterised by means (65, 80) for the transformation of the flow vector into the stator-oriented coordinate system.

21. A device as claimed in one of Claims 11 to 19, characterised by a device (73) which precedes the voltage input of the EMK detector and serves to suppress direct voltages.

22. A device as claimed in one of Claims 11 to 20, characterised in that the rotary angle $(\overline{\theta_s})$ of the rotating coordinate system is supplied with means (81, 82) for the coordinate transformation of actual and/or theoretical vectors, and that the transformed actual and/or theoretical vectors are supplied to the control device of an inverter which supplies the stator current of the induction machine.

## Revendications

1. Procédé pour déterminer le vecteur du flux $(\psi, \underline{\varphi}_s)$ d'une machine à champ tournant (21) à partir d'un courant statorique $(i_s)$ et d'une tension statorique $(u_s)$, comprenant les phases opératoires suivantes :

a) à partir des valeurs de mesure du courant $(i_s)$ et de la tension $(\underline{e}_s)$, on forme la composante, rapportée au stator, du vecteur de la force électromotrice $(e_s)$ de la machine,

b) on modifie le vecteur de la force électromotrice à l'aide d'un signal de réaction $(\dot{\varphi}_s)$ dérivé du vecteur du flux déterminé, et

c) on forme le vecteur du flux par intégration du vecteur modifié de la force électromotrice $(\underline{e}_c)$, caractérisé par les autres moyens suivants :

d) on détermine le vecteur modifié de la force électromotrice, au moyen de composantes orthogonales de la force électromotrice dans un système de coordonnées tournant à une fréquence pouvant être commandée,

e) on forme la valeur $(\psi)$ du vecteur du flux par intégration de la première composante tournante de la force électromotrice $(e_{\varphi 1})$, et

f) on forme le signal de réaction à partir du quotient de la seconde composante tournante de la force électromotrice $(e_{\varphi 2})$ et de la valeur $(\psi)$ du vecteur du flux, sous la forme de la fréquence $(\dot{\varphi}_s)$ du vecteur du flux et on forme, par intégration de la fréquence $(\dot{\varphi}_s)$ un signal angulaire $(\underline{\varphi}_s)$ qui détermine simultanément l'angle de rotation $(\theta_s)$ du système de coordonnées tournant et la direction du vecteur du flux (Fig. 5).

2. Procédé pour déterminer le vecteur du flux $(\underline{\psi}_s)$ d'une machine à champ tournant à partir du courant statorique $(\underline{i}_s)$ et de la tension statorique $(\underline{u}_s)$, présentant les caractériques suivantes :

a) à partir du courant et de la tension, on forme les composantes, rapportées au stator, du vecteur de la force électromotrice $(\underline{e}_s)$ de la machine,

b) on modifie le vecteur de la force électromotrice $(\underline{e}_s)$ au moyen d'un signal de réaction $(\dot{\varphi}_s)$ dérivé du vecteur déterminé du flux, et

c) on forme le vecteur du flux $(\varphi_s)$ par intégration du vecteur modifié de la force électromotrice $(\underline{e}_c)$, caractérisé par les moyens supplémentaires suivants :

d) on détermine le vecteur modifié de la force électromotrice au moyen de la somme $(e_{\varphi 1} + \Delta\psi^*)$ d'une première composante orthogonale $(e_{\varphi 1})$ de la force électromotrice, dans un système de coordonnées tournant et d'un premier signal de renvoi $(\Delta\psi^*)$, et au moyen d'une seconde composante orthogonale $(e_{\varphi 2})$ dans le système de coordonnées tournant,

e) on forme la valeur $(\psi)$ du vecteur du flux par intégration de la première composante modifiée $(e_{\varphi 1} + \Delta\psi^*)$ de la force électromotrice, et le premier signal de réaction $(\Delta\psi^*)$ à partir de l'écart de réglage $(\psi^* - \psi)$ de la valeur et d'une grandeur pilote $(\psi^*)$ de cette valeur, et

f) on forme un second signal de réaction $(\dot{\varphi}_s)$ à partir de l'écart de réglage d'un signal $(\underline{\varphi}_s)$, qui détermine l'angle de rotation $(\varphi_s)$ du système de coordonnées tournant et d'un signal pilote $(\underline{\varphi}_s{}^*)$ de l'angle pour la direction du vecteur du flux, sous la forme d'une fréquence $(\dot{\varphi}_s)$ de ce vecteur, et on forme, par intégration de la fréquence, un signal d'angle $(\underline{\varphi}_s)$ qui détermine l'angle de rotation $(\varphi_s)$ et la direction du vecteur du flux (Fig. 6).

3. Procédé suivant la revendication 1 ou 2, caractérisé par le fait que grâce à une transformation d'un vecteur $(\overline{e}_s)$, qui est formé à partir des valeurs de mesure du courant ou de la tension et qui correspond à une force électromotrice lissée, on forme la première composante cartésienne ($\psi_{\overline{\varphi 1}}$) par addition (circuit additionneur 62) de la première composante intégrée ($\overline{e_{\varphi 1}}$) du vecteur modifié de la force électromotrice et d'un signal (multiplicateur 61) proportionnel à la constante de temps de lissage (t) et à la première composante du vecteur modifié de la force électromotrice, et on forme la seconde composante cartésienne ($\psi_{\overline{\varphi 2}}$) du vecteur du flux ($\psi_{\overline{\varphi}}$) dans le système de coordonnées tournant, à partir d'un signal (multiplicateur 63) proportionnel à la constante de temps de lissage (t) et à la seconde composante cartésienne ($\overline{e_{\varphi 2}}$) du vecteur modifié de la force électromotrice ($\underline{e_{\overline{\varphi}}}$) (Fig. 8).

4. Procédé suivant l'une des revendications 1 à 3, caractérisé par le fait qu'on ajoute au vecteur transformé de la force électromotrice un vecteur de correction ($\delta\psi$), qui est dérivé du vecteur du flux et qui, dans le cas d'un fonctionnement stationnaire de la machine à champ tournant, supprime une composante continue dans le lieu géométrique fixe du vecteur du flux. (Fig. 11).

5. Procédé suivant la revendication 4, caractérisé par le fait qu'une différence de direction par rapport au vecteur du flux et une valeur, qui est proportionnelle à une grandeur (— $\dot{\psi}$ ou — $\overline{e_{\varphi 2}}$), disparaissant dans le cas où le lieu géométrique est centré, du vecteur du flux, est prédéterminée (multiplicateur 76) pour le vecteur de correction ($\delta\psi$) (Fig. 11).

6. Procédé suivant la revendication 5, caractérisé par le fait que la valeur de correction est prédéterminée de telle sorte qu'elle est dirigée — sous la forme de la moyenne prise sur un cycle du lieu géométrique — à la composante continue dans le lieu géométrique fixe dans l'espace (Fig. 11).

7. Procédé suivant la revendication 5, caractérisé par le fait que la valeur du vecteur de correction est proportionnelle, avec un facteur prédéterminé de proportionnalité, notamment avec un facteur de proportionnalité déterminé en fonction de la fréquence ($\dot{\overline{\varphi}}_s$) du vecteur du flux et/ou d'une grandeur d'état (W) de la machine à champ tournant, à la dérivée de la valeur du flux ($\dot{\psi}$) ou est proportionnelle à la première composante orthogonale de la force électromotrice ($\overline{e_{\varphi 1}}$) du vecteur transformé de la force électromotrice ou est proportionnelle à la différence ($\dot{\psi} - \dot{\psi}^*$ ou $\overline{e_{\varphi 1}} - \dot{\psi}^*$) entre la dérivée ou la première composante du vecteur transformé de la force électromotrice et une grandeur de guidage instationnaire ($\dot{\psi}^*$) (Fig. 11).

8. Procédé suivant la revendication 5, caractérisé par le fait qu'une composante, qui est perpendiculaire au vecteur du flux et dépend de la fréquence du vecteur du flux, notamment de la fréquence du flux et d'une grandeur d'état de la machine à champ tournant, et ne disparaît pas pour des fréquences non nulles, est prédéterminée pour la direction du vecteur de correction (Fig. 12).

9. Procédé suivant les revendications 6 ou 7, caractérisé par le fait que la composante perpendiculaire au flux est positive ou négative, en fonction du signe du produit de la fréquence du flux par la valeur du vecteur de correction (Fig. 10).

10. Procédé suivant les revendications 2 ou 7, caractérisé par le fait que les grandeurs pilotes sont formées à partir de valeurs de consigne de la machine ou par simulation du flux à partir de valeurs réelles pour le courant et la position du rotor de la machine.

11. Application du procédé suivant l'une des revendications 1 à 10 pour le fonctionnement, orienté en fonction du champ, d'une machine à champ tournant alimentée par un convertisseur statique, selon lequel la position du flux est déterminée et le convertisseur est commandé en fonction de la position déterminée du flux de telle sorte que l'on peut influer d'une manière indépendante sur la composante, parallèle au flux, et sur la composante, perpendiculaire au flux, du courant statorique (Fig. 5).

12. Dispositif qui permet de déterminer le flux d'une machine à champ tournant à partir d'une tension et d'un courant, comportant :

a) un détecteur (55) de la force électromagnétique, qui forme, à partir du courant ($\underline{i}_s$) et de la tension ($\underline{u}_s$), les composantes, rapportées au stator, d'un vecteur de la force électromotrice ($\underline{e}_s$),

b) un étage de calcul (74) qui forme un vecteur modifié de la force électromotrice ($\overline{e_{\varphi}}$) au moyen d'un signal de réaction ($\dot{\overline{\varphi}}_s$) dérivé du vecteur du flux, et

c) un étage d'intégration (58) qui forme le vecteur du flux ($\psi_{\overline{\varphi}}$) par intégration du vecteur modifié de la force électromotrice,

caractérisé par le fait que :

d) l'étage de calcul contient des moyens (3, 79) servant à former les composantes orthogonales de la force électromotrice dans un système de coordonnées tournant,

e) que l'étage d'intégration contient, pour la formation d'un premier signal d'intégration ($\psi_{\overline{\varphi 1}}$), un premier intégrateur (5) auquel est envoyée la première composante orthogonale de la force électromotrice ($\overline{e_{\varphi 1}}$) et dont le signal de sortie détermine la première composante du vecteur du flux dans le système de référence tournant ou, dans le cas d'un axe de coordonnées parallèle au flux, la coordonnée correspondant à la valeur du vecteur, et

f) qu'il est prévu un générateur (2, 4) de signal angulaire, comportant un second intégrateur (2) servant à former un second signal d'intégration, auquel cas le second intégrateur (2) est chargé par le signal de réaction ($\dot{\overline{\varphi}}_s$), qui est dérivé d'une grandeur du vecteur déterminé du flux et est associé à la fréquence du vecteur du flux, et le second signal d'intégration ($\underline{\varphi}_s$) est envoyé en tant qu'angle de rotation du système de coordonnées tournant à l'étage de calcul (74) (Fig. 11).

13. Dispositif suivant la revendication 12, caractérisé par le fait que l'étage d'intégration (58) contient un diviseur (11) servant à former le quotient entre la seconde composante orthogonale de la force électromotrice et le premier signal d'intégration, et que le signal de sortie ($\dot{\overline{\varphi}}_s$) du diviseur est envoyé à l'entrée du second intégrateur (2) et que le second signal d'intégration est envoyé à un dispositif de sortie (65, 80) délivrant l'angle ou les composantes cartésiennes du vecteur du flux (Fig. 11).

14. Dispositif suivant la revendication 12 ou 13, caractérisé par un dispositif (75, 76) de formation du vecteur de correction, qui sert à prédéterminer un vecteur de correction ($\delta\psi$) qui est pivoté par rapport au vecteur du flux, et notamment n'est pas parallèle au vecteur du flux et disparaît à l'état stationnaire, et par des moyens (77) servant à additionner le vecteur de la force électromotrice et le vecteur de correction (Fig. 11).

15. Dispositif suivant la revendication 14, caractérisé par des moyens servant à former une grandeur, approximativement proportionnelle à la dérivée ($\dot\psi$) du flux, à partir de la première composante du vecteur modifié de la force électromotrice ou à partir de la valeur du vecteur du flux, et par des moyens (76) montés en aval et servant à déterminer la valeur du vecteur de correction (Fig. 11).

16. Dispositif suivant la revendication 14 ou 15, caractérisé par un dispositif (75) de formation du vecteur de commande, chargé par la fréquence du vecteur du flux ou du système de référence tournant et de préférence également par une grandeur (W) caractérisant l'état de charge de la machine et qui, conformément à une dépendance fonctionnelle par rapport à ses grandeurs d'entrée, détermine les composantes d'un vecteur de commande dans le système de référence tournant, et par un étage multiplicateur (76), qui fournit le vecteur de correction, par multiplication du vecteur de commande par une grandeur déterminant la valeur (Fig. 11).

17. Dispositif suivant la revendication 12, caractérisé par le fait que le dispositif (2, 4) de formation du signal angulaire contient un régulateur (71) d'asservissement de l'angle, qui est branché en amont du second intégrateur (2) et qui est chargé par la différence entre l'angle de rotation ($\overline{\varphi}_s$) et un angle de rotation pilote ($\psi_s{}^*$), pour la formation du signal de réaction ($\overline{\dot\varphi}_s$), qu'un régulateur (70) d'asservissement de la valeur, chargé par le premier signal d'intégration et par une valeur pilote ($\psi^*$), forme un signal supplémentaire d'asservissement ($\Delta\psi$) et que l'étage de calcul (74) contient un circuit additionneur (79) pour le signal supplémentaire de réaction et la première composante orthogonale de la force électromotrice.

18. Dispositif suivant la revendication 17 et l'une des revendications 13 à 16, caractérisé par des moyens de commutation (72) à l'aide desquels l'entrée du second intégrateur (2) peut être commutée au choix ou en alternance entre la sortie du diviseur (11) et du régulateur (71) d'asservissement de l'angle.

19. Dispositif suivant l'une des revendications 12 à 18, caractérisé par le fait que le détecteur (55) de la force électromotrice contient des moyens servant à former un vecteur lissé de la force électromotrice ($\overline{e}_s$), qui est envoyé à l'étage de calcul (74) de manière à être transformé en étant rapporté au système de référence tournant, qu'un signal, qui est prélevé sur la sortie de l'étage de calcul servant à délivrer la première composante orthogonale de la force électromotrice et qui est proportionnelle à la constante de temps de lissage (t) (multiplicateur 61), une première composante cartésienne ($\overline{\psi_{\varphi1}}$) du vecteur du flux est formée dans le système de référence tournant et un signal, prélevé sur la sortie de l'étage de calcul servant à délivrer la seconde composante orthogonale de la force électromotrice et proportionnelle à la constante de temps de lissage (multiplicateur 63), et formée en tant que seconde composante cartésienne ($\overline{\psi_{\varphi2}}$) du vecteur du flux dans le système de référence tournant.

20. Dispositif suivant la revendication 18, caractérisé par des moyens (65, 80) servant à transformer le vecteur du flux en le rapportant au système de coordonnées orienté par rapport au stator.

21. Dispositif suivant l'une des revendications 11 à 19, caractérisé par un dispositif (73) branché en amont de l'entrée de tension du détecteur de la force électromotrice et servant à supprimer des tensions continues.

22. Dispositif suivant l'une des revendications 11 à 20, caractérisé par le fait que l'angle de rotation ($\overline{\dot\varphi}_s$) du système de coordonnées tournant est envoyé à des moyens (81, 82) servant à réaliser la transformation des coordonnées de vecteurs réels et/ou de vecteurs de consigne, et que les vecteurs réels et/ou les vecteurs de consigne, transformés, sont envoyés au dispositif de commande d'un convertisseur délivrant le courant statorique de la machine à champ tournant.

FIG 1

FIG 2

FIG 3

FIG 4

FIG 5

0 127 158

FIG 6

FIG 7

FIG 8

**FIG 9**

**FIG 12**

FIG 10

FIG 11

0 127 158